# EUROPEAN PATENT SPECIFICATION

(11) **EP 1 781 148 B1**
(45) Date of publication and mention of the grant of the patent: **07.05.2008**
(21) Application number: 04745216.4
(22) Date of filing: 20.07.2004
(51) Int. Cl.: A47J 31/30

(54) **EQUIPMENT FOR THE PREPARATION OF A HOT BEVERAGE**
AUSRÜSTUNG FÜR DIE ZUBEREITUNG EINES HEISSGETRÄNKS
EQUIPEMENT DESTINE A LA PREPARATION D'UNE BOISSON CHAUDE

(43) Date of publication of application: 09.05.2007
(73) Proprietor: BIALETTI INDUSTRIE S.P.A., 25030 Coccaglio (Brescia) (IT)
(72) Inventor: RANZONI, Francesco, I-25030 Coccaglio (Brescia) (IT)
(74) Representative: Leihkauf, Steffen Falk
(86) International application number: PCT/IT2004/000393
(87) International publication number: WO 2006/008763

(56) References cited:
- EP-A- 1 093 746
- IT-B- 1 171 070

## Description

. This invention relates to equipment for the preparation of a hot beverage.

. According to further aspects, this invention relates to methods for the preparation of some types of hot beverages and valve means designed for use in such methods or equipment for the preparation of a hot beverage.

. This invention relates in particular to the field of equipment for the production of a coffee infusion conventionally known as a coffee-maker or moka.

. Coffee-makers which make it possible to provide a coffee infusion by conventional means are known. Coffee-makers which make it possible to provide a frothy coffee infusion are also known.

. Coffee-makers of the known type do not offer great versatility in use which renders them suitable for easily obtaining a wide range of hot beverages such as cappuccino, milk with a dash of coffee and others.

. Attempts to achieve this have not been successful from the industrial or commercial points of view because of difficulties in manufacture and use, and the complexity of the equipment and therefore its corresponding cost.
From EP-A-1093746 it is known a coffee maker valve from the production of frothed white coffee having a shutter blocked by a lever when it is raised in an open position.

. The object of this invention is to devise and provide equipment and valve means for preparing a hot beverage which make it possible to satisfy the above requirement and at the same time make it possible to overcome the disadvantages which have been mentioned above with respect to the known art. A further object of this invention is to devise and provide methods for preparing various types of hot beverages using equipment of the coffee-maker or moka type.

. In particular the object of this invention is to provide equipment which is extremely versatile and simple to make and use.

. This object is accomplished through equipment according to claim 1. The dependent claims relate to advantageous embodiments of the equipment.

. Other advantages and characteristics of the equipment, the valve means and methods according to the invention will become clear from the following detailed description which is given with reference to embodiments provided in the appended drawings which are provided purely by way of non-limiting example and in which:

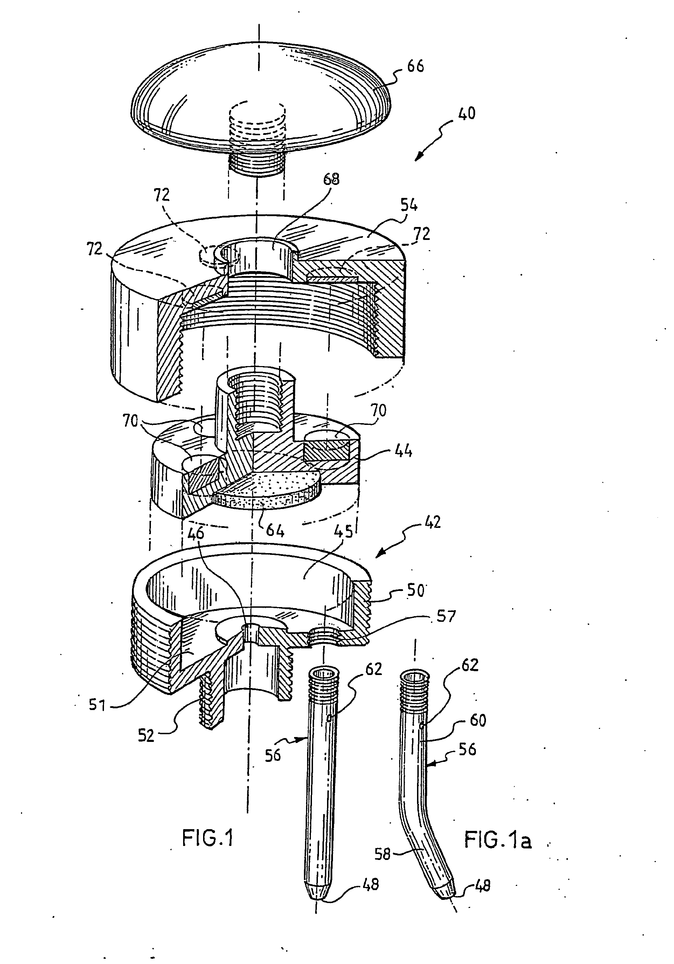

. Figure 1 illustrates a perspective exploded view in partial cross-section of valve means suitable for use in equipment for the preparation of a hot beverage according to this invention,

. Figure 1a illustrates a possible variant of the embodiment in Figure 1,

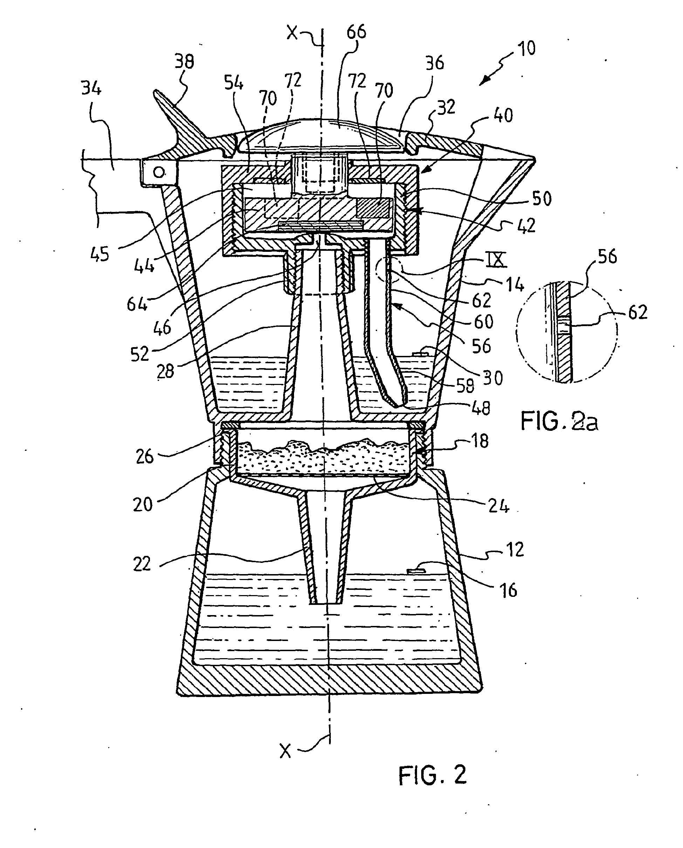

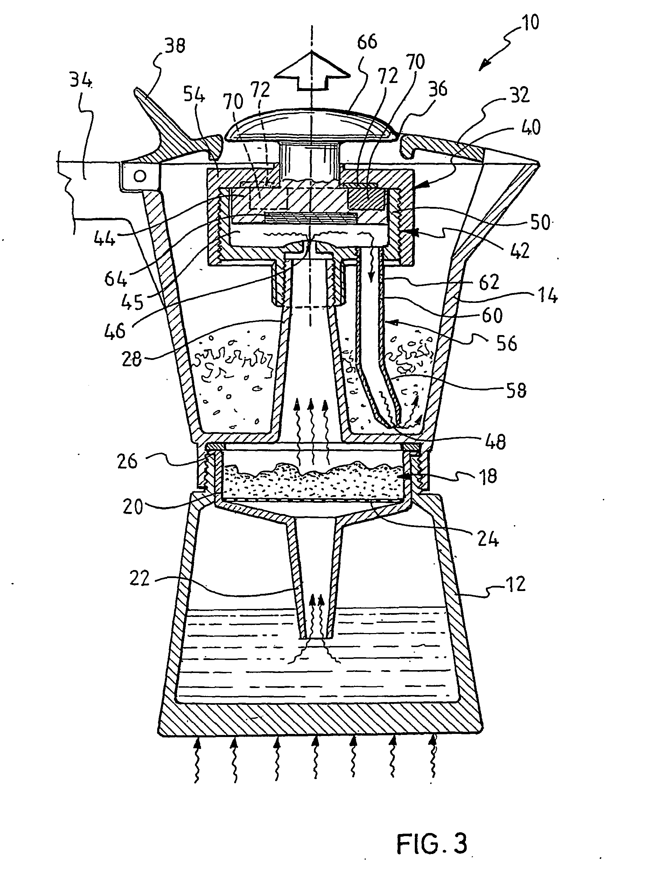

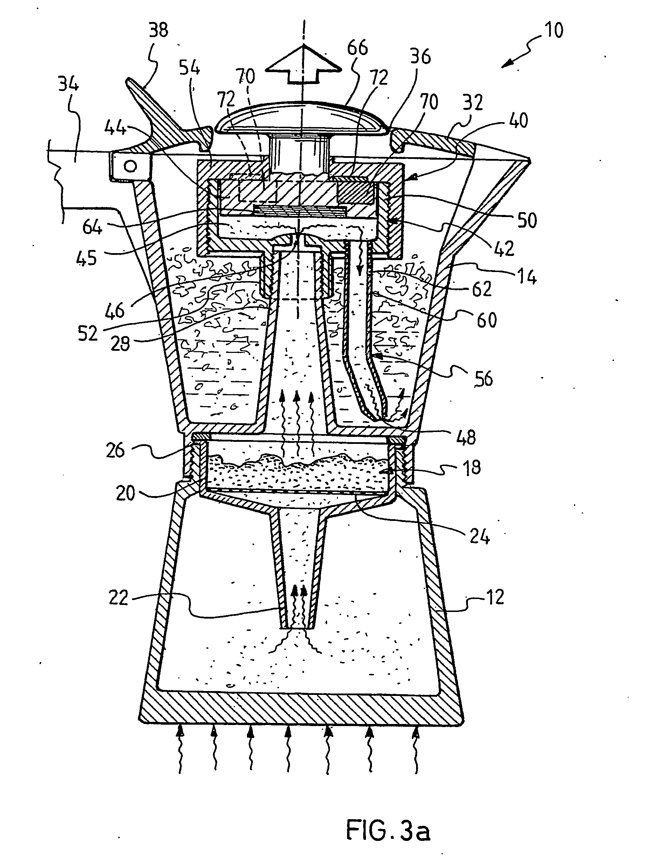

. Figures 2, 3 and 3a illustrate a longitudinal cross-section through equipment for the production of a hot beverage under different operating conditions,

. Figure 2a illustrates an enlarged detail of Figure 2,

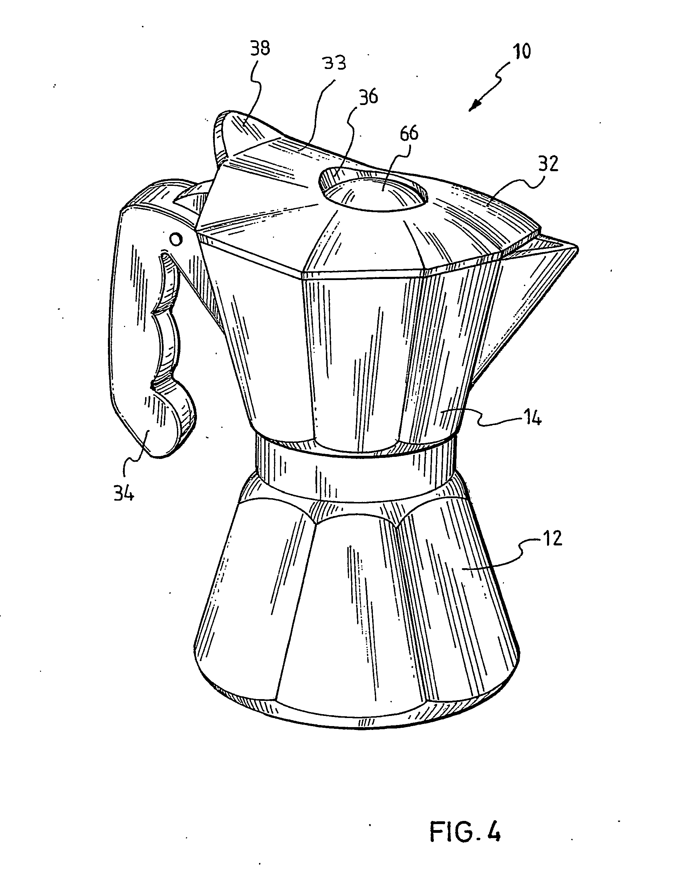

. Figure 4 illustrates a perspective view of equipment for the production of a hot beverage according to a possible embodiment,

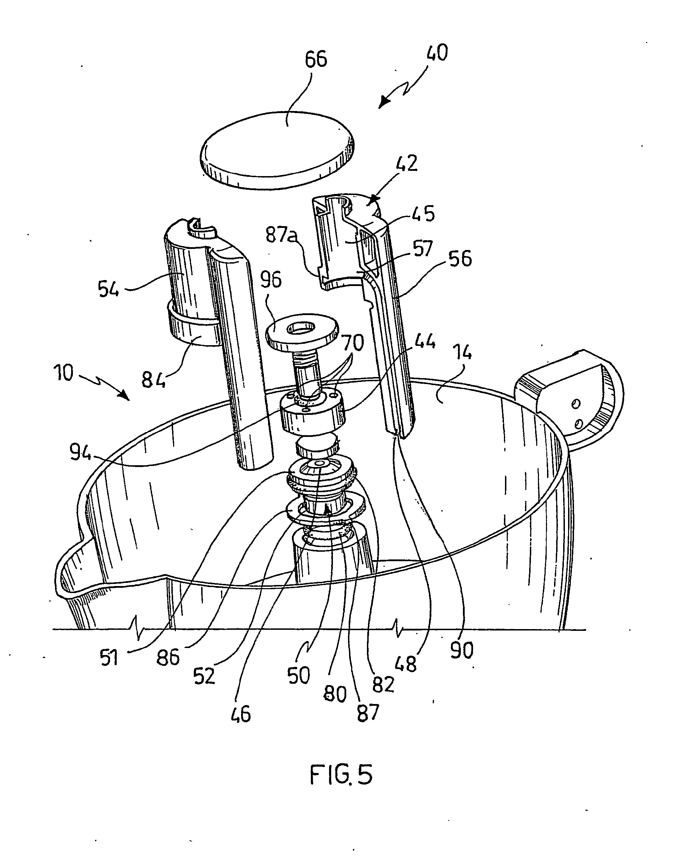

. Figure 5 illustrates an exploded view of a possible embodiment of valve means suitable for use in equipment for the preparation of a hot beverage,

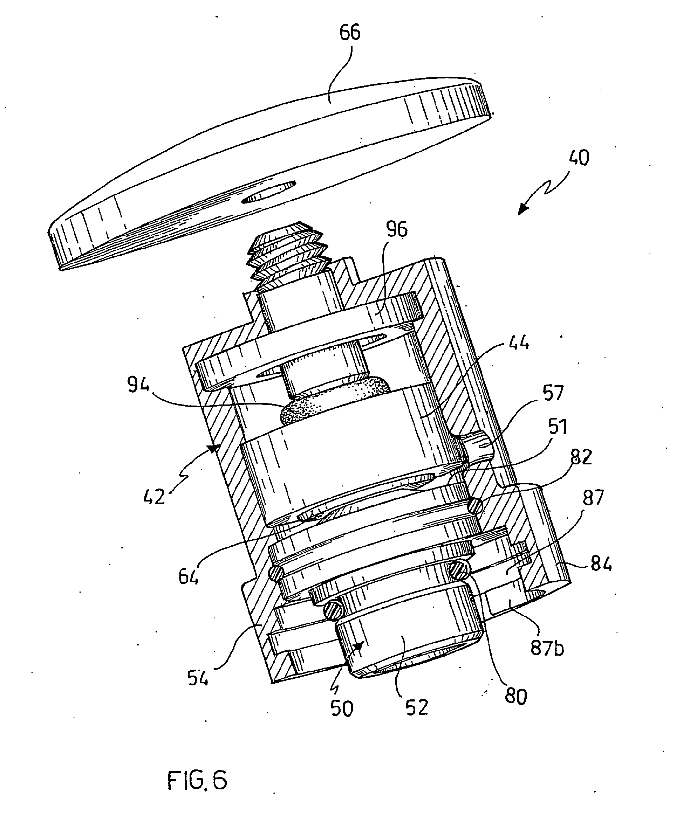

. Figure 6 illustrates a cross-sectional view of some details of the valve means in Figure 5,

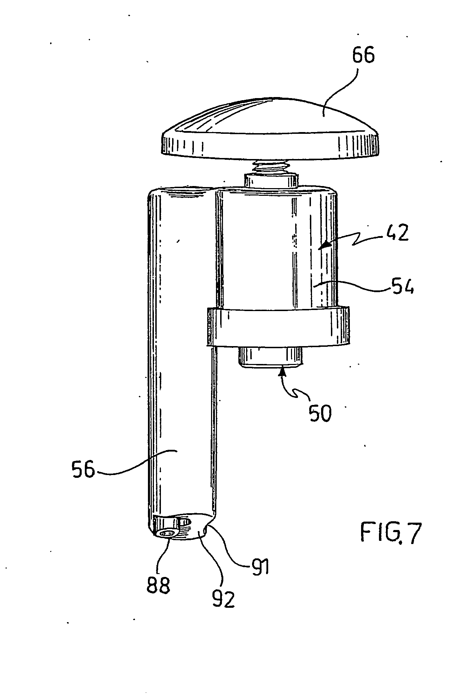

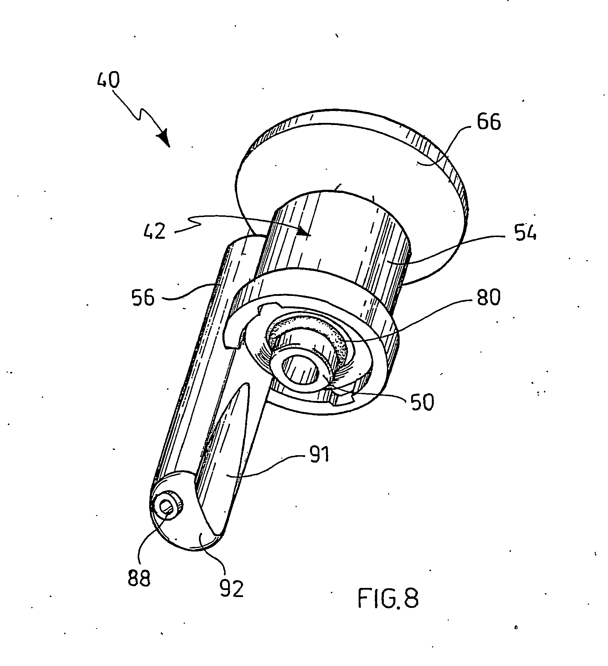

. Figures 7 and 8 illustrate respectively a side view and a perspective view of a possible embodiment of the valve means in Figure 5,

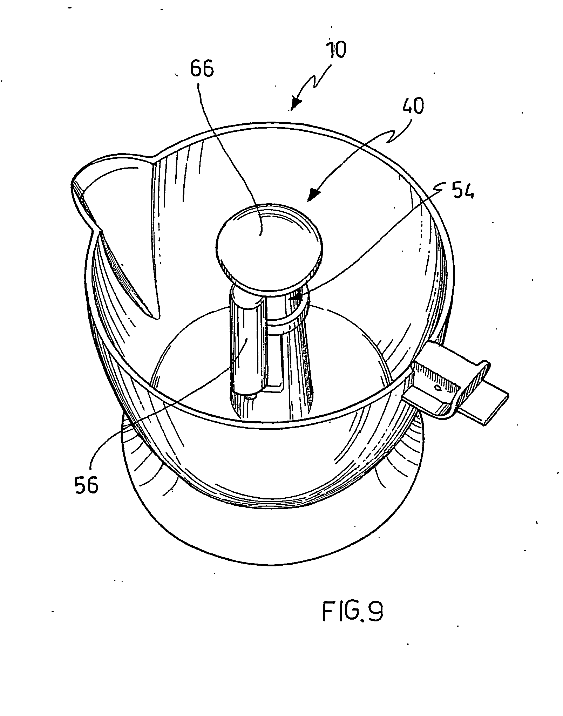

. Figure 9 illustrates a diagrammatical perspective view of a portion of equipment according to this invention provided with valve means according to Figures 7 and 8,

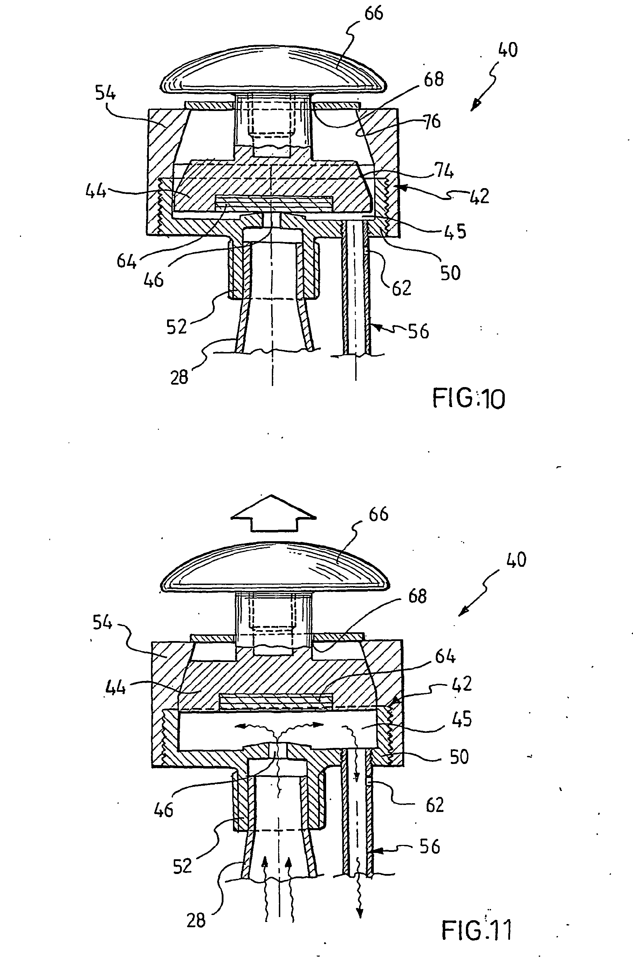

. Figures 10 and 11 illustrate a cross-sectional view of a possible embodiment of valve means suitable for use in equipment for the preparation of a hot beverage,

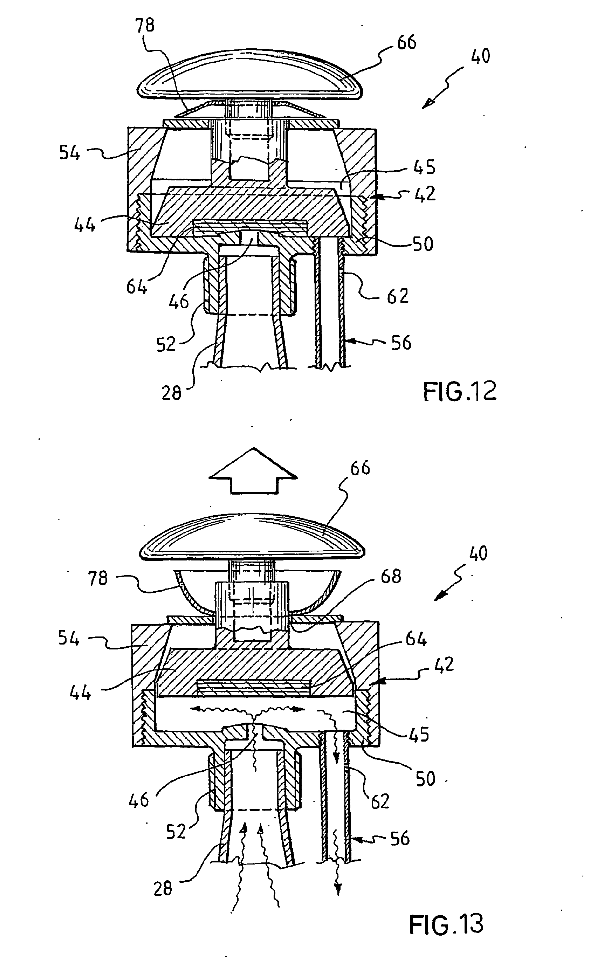

. Figures 12 and 13 illustrate a cross-sectional view of a possible embodiment of valve means suitable for use in equipment for the preparation of a hot beverage,

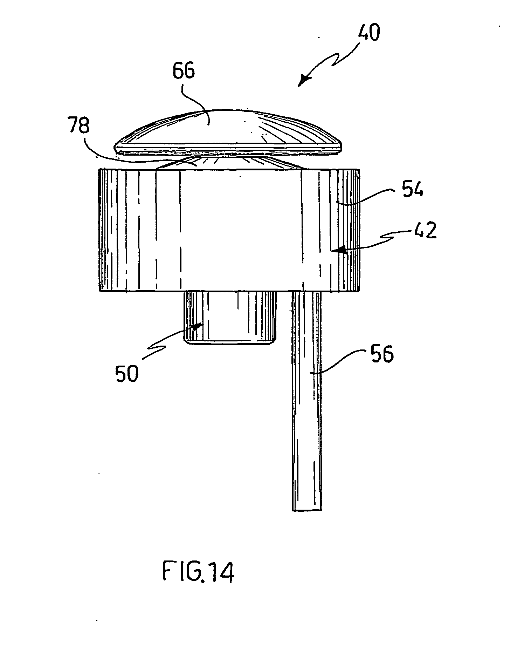

. Figure 14 illustrates a side view of a possible embodiment of valve means suitable for use in equipment for the preparation of a hot beverage,

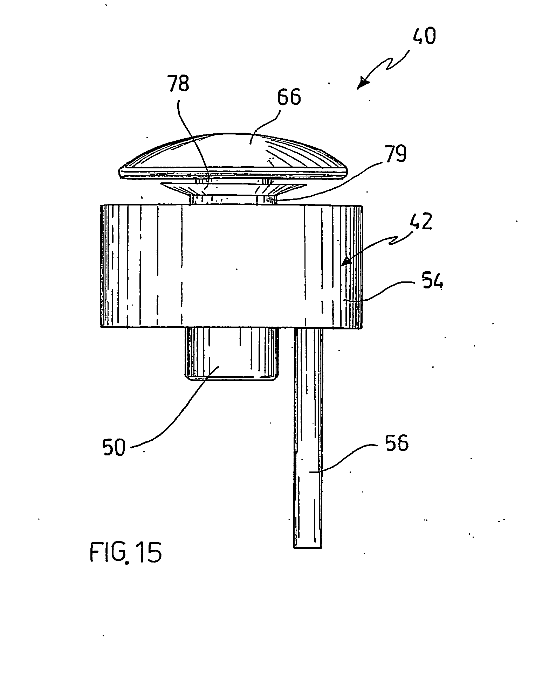

. Figure 15 illustrates a side view of the valve means in Figure 14 in a different operating condition,

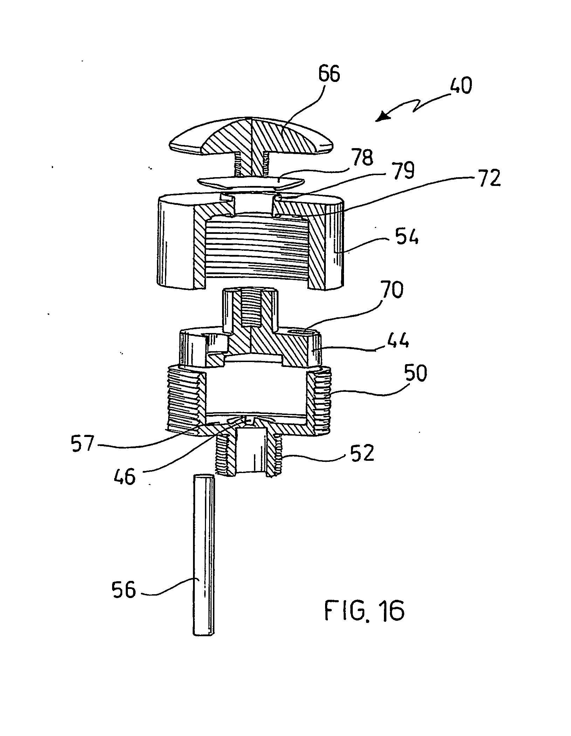

. Figure 16 illustrates an exploded view in partial cross-section of the valve means in Figure 14.

. With reference to the above figures, 10 indicates as a whole equipment for the preparation of a hot beverage. According to a possible embodiment the hot beverage may comprise at least one first liquid component and one second preferably liquid component which is miscible with the first component.

. The equipment to which this invention relates belongs to the sector of coffee-makers, more commonly known as moka, but is more versatile and reliable than known coffee-makers in that it makes it possible to obtain a wide range of beverages among which it is possible to mention, purely by way of example, cappuccino, latte, foamy or non-foamy coffee and foamy hot milk.

. In the description which follows particular reference will be made to use of the equipment to prepare a cappuccino or a hot beverage comprising milk and coffee infusion and characterised by the presence of milk foam which renders it particularly pleasant. In this case the first liquid component comprises water and the second component comprises milk in liquid form. Obviously the equipment according to the invention is in any event capable of preparing a wide range of hot beverages, not exclusively cappuccino, as will be illustrated below by way of example.

. With reference to the various embodiments illustrated, common functional elements are indicated by the same reference numbers.

. Equipment 10 comprises a boiler 12 suitable for holding the first liquid component of the beverage. In the specific instance in which it is desired to obtain cappuccino, the first liquid component for example comprises water. A collection container 14 is located above boiler 12, preferably screwed thereto. According to a possible embodiment collection container 14 can contain the second component of the beverage, if specified. In the specific case in which the beverage being prepared is cappuccino, the second component of the beverage comprises for example milk in liquid form.

. According to a possible embodiment, a reference mark 16 located at a predetermined height above the bottom of the boiler may be advantageously provided along the inner surface of boiler 12. Reference mark 16 may for example comprise a line in relief indicating the filling level for the first liquid component (for example water) in the boiler.

. Boiler 12 also comprises a safety valve, not illustrated, fitted in a wall of the boiler.

. 18 indicates a container which can be inserted into the open mouth of boiler 12. The container is designed to contain a further component of the hot beverage which in the specific instance in which it is desired to prepare a cappuccino for example comprises ground or powdered coffee.

. Container 18 comprises a bowl 20 which is extended beneath by a tube 22 which is for example connected to the bowl through a flared portion. The base of the bowl comprises at least one filter 24 for example comprising a disk with a plurality of small holes. According to one embodiment container 18 also comprises an edge 26 designed to rest on the upper edge of the open mouth of boiler 12.

. In the assembled position of equipment 10, container 18 is inserted into the boiler in such a way that tube 22 extends within the boiler. In addition to this collection container 14 is screwed to boiler 12 above container 18 as for example illustrated in Figure 2.

. Within collection container 14, preferably centrally therewith, there arises a delivery pipe 28 which is open at the top and bottom. The delivery pipe extends along an axis X which under the normal conditions of use of the equipment lies in a substantially vertical direction.

. Lower opening of delivery pipe 28 is in communication with boiler 12, in particular with container 18, for example through the intermediary of a further filter, not illustrated, which forms the base of the collection container. The upper opening of delivery pipe 28, that is the outlet of delivery pipe 28, empties into collection container 14. In accordance with a possible embodiment the outlet of the delivery pipe is provided with a threaded portion.

. According to a possible embodiment, a reference mark 30 located at a predetermined height above the base of the collection container may advantageously be provided along the inner surface of collection container 14. Reference mark 30 may for example comprise a line in relief indicating the filling level for the second component (for example milk, if specified) in the collection container.

. In the examples illustrated, tube 22, container 18 and delivery pipe 28 constitute means defining a delivery path for the third liquid component, for example water, from the boiler to the collection container. The means defining a delivery path may however be provided differently.

. 32 indicates a lid for the equipment, mounted on the collection container. The lid is advantageously hinged on one side of the collection container, for example on the side of a handle 34. In accordance with a possible embodiment lid 32 has an opening 36. Preferably the opening is made in the portion located above delivery pipe 28, even more preferably in a central portion of the lid.

. In accordance with the possible embodiment lid 32 has a graspable element 38 located in an off-centre position on the lid. Graspable member 38 is for example located between opening 36 and handle 34, advantageously in a projecting portion 33 of the lid.

. Equipment 10 advantageously comprises valve means 40 located along the delivery path for the first liquid component. Figures 1 and la illustrate an exploded perspective view in partial cross-section of two embodiments of valve means 40.

. According to a possible embodiment the valve means are located at the outlet of delivery pipe 28, preferably along axis X.

. According to a possible embodiment, valve means 40 comprise a valve body 42 in which there is housed a plug 44 which can move between a closed position and an open position along the delivery path according to the pressure within the boiler. Plug 44 can for example move in a direction coinciding with the direction of gravity, and in particular with the X axis. In this way the weight of the plug acts on the plug tending to move it into or hold it in a closed position and the force deriving from the pressure in the boiler tends to push it into an open position (upwards with reference to normal use of the equipment).

. Valve body 42 defines a chamber 45 in which there is housed plug 44 and is provided with an inlet 46 which can be placed in communication with the outlet of the delivery path and an outlet 48 which can be placed in communication with collection container 14.

. With reference to the example illustrated in Figure 1, the valve body comprises a seat 50 which can be fitted in delivery pipe 28. In particular seat 50 has a cylindrical wall which laterally bounds chamber 45 and an end 51 in which inlet 46 is provided. From the bottom of seat 50 there extends beneath a threaded portion 52 which can be attached to the threaded portion of delivery pipe 28. In the situation in Figure 1 the thread for the valve means is external so that it can be screwed internally into the delivery pipe, whereas in Figures 2, 3 and 3a the valve means are screwed to the delivery pipe externally.

. Valve body 42 also comprises a cap 54 mounted on the seat to close chamber 45. Advantageously lid 42 is screwed to seat 50, preferably to the cylindrical wall.

. According to a possible embodiment, inlet 46 of valve body 44 is located centrally in the bottom of seat 50. In other words inlet 46 has the same access as delivery pipe 28.

. According to a possible embodiment, outlet 48 from valve body 44 is located laterally at the inlet with respect to the X axis of delivery pipe 28.

. Advantageously delivery pipe 28 has an extension within collection container 14 such as to keep inlet 46 of the valve body above the surface of the hot beverage present in the collection container (Figure 3a).

. According to a possible embodiment, outlet 48 from valve body 44 lies at a level lower than inlet 46 along the X axis with reference to the normal condition of use of the equipment. Advantageously valve body 44 comprises at least one conduit 56 having a free end defining outlet 48 from the valve body. Preferably the free end has a smaller cross-section than the remaining part of the conduit, for example in the shape of a nozzle.

. According to a possible embodiment, conduit 56 extends below the bottom of valve body 44, in communication with chamber 45 through an opening 57. Advantageously the full length of conduit 56 is located beneath inlet 46 of valve body 44.

. In accordance with a possible embodiment, conduit 56 is straight. Figure 1 illustrates a possible embodiment in which the conduit extends in a single direction, preferably parallel to the X axis. Figure 1a illustrates a different embodiment in which advantageously conduit 56 has a terminal portion 58 which is inclined with respect to a portion 60 of the conduit attached to the valve body. Advantageously terminal portion 58 is inclined with respect to the direction of the X axis of delivery pipe 28. Even more advantageously the terminal portion 58 of conduit 56 is inclined in a direction tangential to a circumference centered on the X axis of the delivery pipe.

. According to a possible embodiment, conduit 56 comprises at least one portion parallel to the X axis of the delivery pipe, for example attachment portion 60.

. Advantageously conduit 56 is mounted on valve body 44 in a movable manner. It may for example be fitted through a threaded or a snap connection or by other means.

. In accordance with a possible embodiment, valve body 44 comprises means to avoid the beverage being sucked back along the delivery path into the boiler. Advantageously these means are constructed as vent means. In accordance with a possible embodiment the vent means comprise a capillary opening 62 provided in the valve means. Preferably capillary opening 62 is located at a level which remains above the level of the hot beverage present in collection container 14. Even more preferably the capillary opening lies in the wall of conduit 56 (Figure 2a) close to the bottom of the valve body.

. In accordance with a possible embodiment, plug 44 has a shape such as to be housed within chamber 45, preferably a cylindrical shape. Advantageously a seal 64 is located on the face of the plug closing inlet 46 of the valve body. In accordance with a possible embodiment seal 64 is fixed in a seat of the plug or directly on the face of the plug which closes inlet 46 of the valve body.

. In accordance with a possible embodiment the plug comprises a portion 66 which extends outside the valve body through opening 68 and which, for example, may take the form of a plunger. Opening 68 is located opposite the delivery pipe, for example in the lid of the valve body. In particular portion 66 which extends outside the valve body comprises a portion having dimensions larger than the dimensions of opening 68. In accordance with a possible embodiment the weight of the plug is calibrated in such a way that the delivery path opens at a particular pressure in the boiler which is sufficient to raise the plug. Advantageously the plug is calibrated by specifying the materials and dimensions of portion 66.

. Advantageously portion 66 which extends outside the valve body is mounted on the plug through opening 68 of the valve body. For example portion 66 which extends outside the valve body is screwed to the plug. In accordance with other embodiments portion 66 is inserted into the plug by a snap fitting or by other means of attachment.

. In accordance with a possible embodiment, in the assembled configuration of equipment 10 and with lid 32 closed onto the collection container, opening 36 of lid 32 is capable of at least partly receiving portion 66 of the plug which extends outside valve body 44. In other words portion 66 of the plug is at least partly accessible from outside the equipment through opening 36 in lid 32. Again in other words the dimensions of opening 36 are such as to at least partly receive portion 66.

. Advantageously the valve means comprise means to immobilise the plug in the position in which the delivery path is open. These means are for example motivated by movement of the plug between the closed position and the open position. In other words the plug is immobilised in the open position through movement of the plug itself from the closed (lowered) position to the open (raised) position in the delivery path.

. A first means whereby the means for immobilising the plug may be operated may occur during heating of the equipment, in particular when a particular pressure is reached within the boiler sufficient to raise the plug. In fact the first liquid component rises along the delivery path and pushes the plug from its initial closed position to the open position activating the means for immobilising the plug.

. A second means whereby the means for immobilising the plug may be activated may be available before heating the equipment, during the stage of preparing the equipment according to the beverage which it is desired to obtain, or during the stage of setting the operating means of the equipment. This second means provides that it is the user who raises the plug pulling portion 66 upwards until the means for immobilising the plug are activated.

. In accordance with the possible embodiment the means for immobilising the plug comprise at least one pair of members 70, 72 designed to interact magnetically with each other, in particular to attract each other through magnetic force, for example a pair of magnets of opposing polarities or a magnet and a member of ferromagnetic material.

. Advantageously a first member 70 of the said pair of members is mounted on plug 44 and a second member 72 of the said pair of members is mounted on a fixed portion, for example on the valve body housing the plug, preferably on the lid of the valve body. In accordance with a different embodiment a first member may comprise the plug itself or a second member may comprise the valve body.

. Advantageously the means for immobilising the plug in the open position are located within the valve body.

. In the example illustrated in Figure 1, at least three pairs of members which can attract each other by magnetic force are provided. In this case each pair is located approximately 120° from the others. According to a different embodiment at least two pairs of members capable of attracting each other by magnetic force may be provided.

. The embodiment illustrated in the figures provides advantageously that the means for immobilising the plug are shaped in such a way that they can be activated and deactivated by an action applied along the direction of movement of the plug, as will be described below.

. In particular the immobilising means are shaped in such a way as to be activated by the movement of the plug itself from the closed position to the open position. As will be described below, this movement of the plug and therefore this activation may be brought about by the pressure within the boiler, that is at the time of delivery, or by the user by setting the operating mode of the equipment.

**.** In addition to this the means for immobilising the plug are shaped in such a way that they can be deactivated by exerting a force directly on the plug designed to return it to the closed position. This force is advantageously exerted directly on the plunger portion of the plug which extends outside the valve body.

. A description of the operation of an item of equipment according to this invention is provided below with reference to Figures 2, 3 and 3a. With reference to the example illustrated, the equipment is designed to prepare a hot beverage commonly known as cappuccino. Other possible uses will be described below.

. A quantity of water is placed in boiler 12, for example up to reference mark 16. Container 18 for ground coffee is placed in the open mouth of the boiler and a quantity of ground coffee is placed in container 18. Collection container 14 is screwed onto boiler 12 and a quantity of milk is placed in collection container 14, for example up to level 30. The configuration described above is for example illustrated in Figure 2 in which the configuration of the valve means, that is the plug in the closed (or lowered position), may be seen. This initial configuration is particularly advantageous for preparing cappuccino in that it makes it possible to raise the pressure and temperature conditions in the boiler at the time when delivering the coffee infusion, thus achieving a high delivery rate for the infusion resulting from that pressure value. The weight of plug 44 and outlet diameter 48 contribute to operation of the equipment.

. The equipment is then placed on a source of heat in such a way as to heat the boiler. The water and air within the boiler heat up causing an increase in pressure within the boiler. As pressure increases the first liquid component (which in the case of the preparation of a cappuccino is water), begins to rise up the delivery path, that is along tube 22, cup 20 and delivery pipe 28. In passing through the ground coffee the water expands and irrigates all the coffee powder producing a coffee infusion.

. Plug 44 however remains in the closed position, that is in the lowered position, until a particular pressure is reached within the boiler, which is greater than atmospheric pressure and capable of raising the plug. When this pressure is reached the plug rises and reaches the open position. The coffee infusion leaves delivery pipe 28 through chamber 45 and pours into collection container 14 through outlet 48. Because of the presence of the valve means the rate at which the coffee infusion leaves is particularly high.

. The thrust exerted on plug 44 and the consequent movement of the plug from the closed position to the open position activates the means for immobilising the plug. In the situation illustrated in Figure 3 the magnets located on the plug are attracted by those provided on the valve body holding the plug in the open or raised position. Movement of the plug can be seen from the outside as a result of the movement of plunger portion 66 which, if present, passes at least partly through opening 36 in the lid.

**.** The coffee infusion leaves the nozzle of conduit 56 and pours into the milk present in the collection container, mixing with it (Figure 3). The milk is heated through both the effect of mixing with the coffee infusion and through thermal conductivity by the material of the equipment.

. By immobilising the plug, the delivery pipe is held open until all the coffee infusion and vapour produced by the residual water present in the boiler has been delivered (Figure 3a), that is even when the pressure within the boiler falls beneath the value sufficient to raise the plug.

. In addition to heating the milk, delivery of the coffee infusion and in particular the subsequent delivery of steam generate turbulence in the milk as a result of which the steam comes into intimate contact with the milk and forms a foam which makes it possible to prepare the so-called cappuccino. With this object outlet 48 is located in such a way as to lie beneath the level of liquid in collection container 14.

. When delivery of the coffee infusion and steam is complete, it is possible to pour out the cappuccino and restore the equipment for further use. If the further use is that of obtaining another cappuccino, it is preferable to restore the valve means to the initial position (Figure 2), that is it is necessary to return the plug to the closed position, that is the lowered position.

. In the case of the equipment in Figure 3a it is sufficient to press on plunger portion 66 so as to overcome the magnetic force holding the plug in the raised position. The position of the plug can be clearly seen both with lid 32 raised and with lid 32 lowered.

. In the situation in which the cappuccino is left in the equipment for sufficient time to cause the boiler to cool, the pressure within the boiler may fall sufficiently to suck the beverage contained in the collection container within it back through conduit 56. The presence of means to prevent sucking-back prevents the beverage from returning along the delivery path to the boiler. In the specific case of the vent means and in particular opening 62, sucking back is prevented in that the negative pressure within the boiler draws in air through the vent means and in particular opening 62.

. The presence of vent means therefore prevents cappuccino from being sucked back from the collection container along conduit 56, valve means 40 and delivery pipe 28 to reach the boiler if negative pressure occurs within the boiler as a result of cooling of the equipment.

. In the situation in which ground coffee is not placed in container 18, this equipment can be used to heat and/or foam the milk present in the collection container through hot water and steam from the boiler.

. In the situation in which the valve means are initially set immobilising the plug in the open position, the final result is a hot beverage for example of the latte or caffè latte type, that is a non-foamy beverage.

. In accordance with a possible embodiment this invention relates to a method for preparing cappuccino using a coffee-maker or moka comprising a boiler, a container for ground coffee and a collection container. This method comprises the stages of:

. Providing the coffee-maker with a quantity of water in the boiler, a quantity of ground coffee in the container for ground coffee and a quantity of milk in the collection container of the coffee-maker,

. Heating the boiler to an excess pressure with respect to atmospheric pressure in which a plug located along a delivery path for the coffee infusion from the boiler to the collection container opens the said delivery path,

. Immobilising the said plug in the position in which the delivery pipe is open until all the coffee infusion and vapour present in the boiler have been delivered,

. In which the said plug is immobilised in the said position in which the delivery pipe is open through magnetic interaction or through a magnetic flux, preferably through magnetic attraction.

. According to a possible embodiment, this invention relates to a method for heating and foaming milk using a coffee-maker comprising a boiler and a collection container. This method comprises the stages of:

. Providing the coffee-maker with a quantity of water in the boiler and a quantity of milk in the collection container of the coffee-maker,

. Heating the boiler to an excess pressure with respect to atmospheric pressure in which a plug located along the delivery path for the water from the boiler to the collection container opens the said delivery path,

. Immobilising the said plug in the position in which the delivery pipe is open until all the water and steam present in the boiler have been delivered,

**.** In which the plug is immobilised in the position in which the delivery pipe is open through magnetic interaction or through a magnetic flux, preferably through magnetic attraction.

. The equipment according to this invention is also suitable for the preparation of other types of beverages. In order to prepare a coffee infusion or other similar products, the equipment may be used and behaves like a coffee-maker of the known type. In this case a quantity of water is placed in the boiler. This quantity of water may be different from that specified for the cappuccino. In addition to this a quantity of powdered coffee or other similar product is placed in container 18. Container 18 is positioned in the boiler and the collection container is screwed to the boiler. The equipment is then placed on a source of heat so that the temperature and pressure conditions of the water and air within the boiler increase.

. If the valve means have been initially set so that the plug is located in the closed position, that is in the lowered position with reference to the normal condition of use of the equipment, the pressure which is generated in the boiler must be capable of raising the plug before delivering the coffee infusion. The weight of the plug is calibrated in such a way that the coffee infusion leaves rapidly at the delivery pressure, so that it is particularly creamy and similar to that prepared using industrial machines.

. Alternatively it is possible to set the valve means in such a way that the plug is immediately immobilised in the open position. Not having to overcome the weight of the plug, the coffee infusion flows into the collection container in the manner of operation of a conventional coffee-maker.

. The initial setting chosen for the valve means makes it possible to control the pressure, temperature and rate conditions at the time of delivery in all possible modes of use of the equipment.

. In fact, with reference to the manner of use as a coffee-maker, this invention relates to a method for selectively obtaining a coffee infusion with or without foam by means of a coffee-maker comprising a boiler, a container for powdered coffee, and a container for collection of the coffee infusion.

. This method comprises the stages of:

. Providing the coffee-maker with a quantity of water in the boiler and a quantity of ground coffee in the container for ground coffee,

. Setting the position of a plug located along a delivery path for the water from the boiler to the collection container between a position in which the delivery path is closed and a position in which it is open, in which the plug can be immobilised in the position in which the delivery pipe is open through magnetic interaction or through a magnetic flux, preferably through magnetic attraction,

. Heating the boiler to an excess pressure with respect to atmospheric pressure in order to deliver a coffee infusion with or without foam depending upon the position in which the plug is set.

. This method can be applied to any other type of hot beverage.

. Further uses are also possible with regard to the components used, for example powdered milk, barley coffee or others. In fact, in addition to operating as a conventional moka or as a moka capable of preparing foamy coffee, this invention relates in general terms to equipment for the preparation of a hot beverage comprising at least one first liquid component and one second preferably liquid component which is miscible with the first component, in which the boiler is designed to contain the first liquid component and the collection container is designed to contain the second component.

. It is clear that variants and/or additions may be made to what has been described and illustrated above.

With reference to the embodiment of the means for immobilising the plug in the open position, the pair of members capable of attracting each other by magnetic force may be constructed in a manner different to that described and/or illustrated. In particular the magnetic force which holds the plug in the open position may be activated or deactivated in any direction with respect to the movement of the plug.

. In addition to this it may be provided that a member of the pair of members be mounted on the plug while the other member of the said pair of members be associated with a portion of the collection container, for example the lid.

. In this case the lid may be conventional, that is without a through hole. Possibly the lid or a part thereof may be constructed of ferromagnetic material or may comprise a ferromagnetic member or a member of a pair of magnets having opposite polarity.

. The member of the said pair of members associated with the plug may advantageously be associated with a portion which extends outside the valve body housing the plug.

. Provision may also be made for other embodiments which use magnets or members capable of attracting each other magnetically and holding the plug in the open position. In particular the embodiment of immobilising means in which members capable of attracting each other by magnetic force are provided may be independent of the means of activating/deactivating the same along the direction defined by the movement of the plug. For example the two members of the pair of members capable of attracting each other by magnetic force may be deactivated in any direction.

. The entire plug may be constructed in the form of a magnet, with the provision that the other member is a magnet of opposite polarity or a ferromagnetic member. Alternatively the plug may be manufactured from ferromagnetic material, providing that the other member of the pair is a magnet.

. In accordance with a possible embodiment, the means for immobilising the plug may operate generically by means of a magnetic flux, that is by a force of attraction or by means of a force of repulsion, depending upon the shape and arrangement of the members forming the pair.

. Figures 5-9 illustrate a possible embodiment of the equipment according to this invention and in particular valve means 40.

. In accordance with a possible embodiment valve body 42 forms a chamber 45 in which there is housed plug 44 and in which there is provided an inlet 46 capable of being placed in communication with the outlet of the delivery path and an outlet 48 capable of being placed in communication with collection container 14. The plug may for example be constructed as in Figure 1 or in accordance with the other embodiments previously described. In accordance with a possible embodiment the plug is constructed of non-magnetic material (for example brass, plastics, etc.) and as in Figure 1 comprises one or more members 70 of a pair of members capable of attracting each other by magnetic force.

. Seat 50 designed to be fitted on delivery pipe 28 has a bottom 51 in which there is provided inlet 46. Unlike the seat in Figure 1 the cylindrical wall of the valve body is defined by cap 54. A threaded portion 52 extends downwards from body 51 and can engage the threaded portion of delivery pipe 28, preferably internally. In accordance with a possible embodiment, seal 80 is mounted on portion 52.

. Cap 54 forms a side or top wall for chamber 45. Advantageously cap 42 is inserted onto seat 50, as will be described below. In accordance with a possible embodiment, a seal 82 is housed between seat 50 and cap 54.

. In accordance with a possible embodiment cap 54 extends below the bottom of seat 50 with an annular portion 84 which can externally enclose an end portion of delivery pipe 28. In accordance with a possible embodiment a guide and immobilising ring 86 is inserted below seat 50, between the seat and the delivery pipe. Guide and immobilising ring 86 comprises a tooth 87 which can be inserted into a groove 87a in the valve body, more specifically in annular portion 84, through a passage 87b.

. In general terms, valve body 42 in which plug 44 is housed is movably mounted on delivery pipe 28. In particular seat 50 of valve body 42 is movably mounted on delivery pipe 28 and cap 54 is movably mounted on seat 50. In the situation in Figure 1 the cap is screwed onto the seat, in the situation in Figure 5 the cap is immobilised on delivery pipe 28 by seat 50. In other words cap 54 comprises a bayonet connection with the delivery pipe. This bayonet connection is provided by means of the coupling between groove 87a and tooth 87.

. Advantageously the bayonet connection is provided between delivery pipe 28 and annular portion 84 of cap 54 which is capable of externally enclosing an end portion of the delivery pipe.

. According to a different embodiment, which is not illustrated, the bayonet connection is provided directly between the delivery pipe and the cap, or the valve body, for example by providing a tooth directly on the delivery pipe.

. Advantageously conduit 56 is made of one piece in the valve body, more specifically in cap 54. In more detail, cap 54 is made in two parts which divide it in half along a longitudinal plane which also divides conduit 56. The two halves are capable of being attached to each other and of internally receiving the members forming valve means 40. In accordance with a possible embodiment cap 54 is made of plastics material and the two halves are welded together, for example by ultrasound. In accordance with a possible embodiment conduit 56 is welded to cap 54 provided in two halves or as a single cylindrical body. Figure 6 in fact shows the valve body to which conduit 56 has not yet been welded.

. In accordance with a possible embodiment conduit 56 extends laterally from the valve body, in communication with chamber 45 through an opening 57 provided laterally in that chamber, for example in the side wall of cap 54. Preferably opening 57 is provided substantially at the same level as inlet 46. Advantageously the walls forming conduit 56 define a radial protuberance of the valve body which extends preferably over the entire height of the valve body. In the case in which conduit 56 extends laterally from the valve body, the conduit has a first curved portion and a second straight portion, for example parallel to the X axis.

. In accordance with a possible embodiment, outlet 48 is constructed in the form of a nozzle 88 which can be inserted into a widened seat 90 of conduit 56 and which preferably projects below the conduit. Advantageously a lower wall 92 of conduit 56 is inclined with respect to the X direction in such a way that nozzle 88 is also inclined with respect to the X direction.

. Nozzle 88 forms a passage having a cross-section which is less than that formed by conduit 56.

. In accordance with a possible embodiment, valve body 44 comprises means to prevent the beverage from being sucked back along the delivery path to the boiler. These means may be provided by vent means, which are not shown, and which are substantially constructed as described in relation to the embodiment in Figure 1. Alternatively the means to prevent sucking back of the beverage may comprise nozzle 88 defining a passage cross-section which is less than that formed by conduit 56 and possibly conduit 56 may be constructed laterally to the valve body as in Figure 5. This arrangement of the means for preventing sucking back, and in particular the passage cross-section of nozzle 88, cause a loss of head which prevents the beverage from being sucked back along conduit 56 before the negative pressure within the boiler returns the plug to the closed position of the delivery path and opening 57.

. In other words, the means for immobilising the plug are arranged in such a way that they can be deactivated by the negative pressure which may be generated within the boiler.

. In accordance with a possible embodiment, the walls forming conduit 56 have a recess 91 to fit on the delivery pipe.

**.** In accordance with a possible embodiment, plug 44 has a cylindrical shape capable of being received within chamber 45. Advantageously a seal 64 is located on the face of the plug which closes inlet 46 of the valve body. In accordance with a possible embodiment a further seal 94 is fitted on a rod of plug 44 forming portion 66 extending outside the valve body.

. In accordance with a possible embodiment, the pair of members which are capable of attracting each other by magnetic force comprise a first member comprising the plug itself or magnets (or ferromagnetic members located on the plug) and a ring 96 housed within the valve body constructed in accordance with the member selected for the plug.

. Advantageously ring 96 and plug 44 are located concentrically within the valve body.

. The functioning of the valve means in Figures 5-9 is similar to that in Figure 1. In the situation in which nozzle 88 is provided, sucking back of the beverage is prevented by the fact that the negative pressure within the boiler pulls the plug back into the closed position before the beverage can rise along conduit 56 as a result of the loss of head caused by the nozzle.

. The mounting of the loading means described above provides that seat 50 is screwed onto delivery pipe 28 with an intermediate seal 80 and guide and immobilising ring 86. Cap 54 in which the plug is housed is inserted on seat 50 in such a way that tooth 87 of guide and immobilising ring 86 is inserted into passage 87b and reaches groove 87a. By rotating cap 54 passage 87b is offset with respect to tooth 87 which is inserted into groove 87a immobilising cap 54 with respect to seat 50 and delivery pipe 28.

. In order to dismantle the valve means it is sufficient to rotate the lid until passage 87b is in line with tooth 87 and lift the lid from seat 50. In this way the components forming the equipment can be thoroughly cleaned.

. In accordance with a further embodiment the immobilising means comprise means for forming a nesting connection between the plug and a fixed portion of the equipment, for example the valve body housing the plug, in the open position for the said plug. Advantageously the immobilising means lie within the valve body housing the plug.

**.** A possible embodiment is for example illustrated in Figures 10 and 11. The members in common with the previous embodiments are indicated using the same reference numbers. The means for effecting a nested connection comprise a first inclined surface 74 of the plug and a second inclined surface 76 for example of the valve body. The first inclined surface has an inclination which is different from that of the second inclined surface. The angle of inclination of the first inclined surface of the plug with respect to a direction of movement of the plug is greater than the angle of inclination of the second inclined surface of the valve body.

. The functioning of the equipment is similar to that previously described. Movement of the plug from the closed position to the open position gives rise to movable nesting between the plug and the valve body. This movement is produced by the user when setting the method of operation of the equipment or is generated by the pressure within the boiler at the time of delivery.

. In accordance with a different embodiment the movable nesting may be provided between a portion of the plug and a portion of the collection container. For example a first portion of the means for effecting a nested connection may lie in a portion of the plug outside the valve body and a second portion of the means for effecting a nested connection may lie within the lid of the collection container.

. In particular, in this case too the immobilising means may be arranged in such a way as to be activated by the movement of the plug from the closed position to the open position. As will be described below this activation may be brought about by the pressure within the boiler, that is at the time of delivery, or by the user when setting the equipment's method of operation.

**.** In addition the means for immobilising the plug may be arranged in such a way that they can be deactivated by exerting a force directly on the plug sufficient to return it to the closed position. This force is advantageously exerted directly on the plunger portion of the plug which extends beyond the valve body.

. The embodiment illustrated in the figures advantageously provides that the means for immobilising the plug are arranged in such a way that they can be activated and deactivated by a force exerted along the direction of movement of the plug.

**.** Also, with this embodiment it is possible to set the equipment's method of operation by setting the plug initially into the open or closed position.

. In accordance with a possible further embodiment the means for immobilising the plug in the open position comprise a bimetallic strip 78 interacting with the plug and capable of adopting at least two configurations corresponding to the open and closed positions of the plug respectively.

. Advantageously the bimetallic strip has a frustoconical structure.

. A possible embodiment is for example illustrated in Figures 12 and 13. Members in common with the previous embodiments are indicated by the same reference numbers. The bimetallic strip advantageously surrounds a portion of the plug around the direction of movement of the plug.

. In accordance with a possible embodiment the bimetallic strip is located between the plug and the valve body housing the plug. Advantageously the bimetallic strip is inserted outside the valve body between the valve body and a portion of the plug extending outside the valve body.

**.** In accordance with a different embodiment, which is not illustrated, the bimetallic strip is inserted within the valve body.

. Figures 14-16 illustrate a further embodiment comprising a bimetallic strip 78. Valve body 42 comprises a projection 79 on which one edge of the bimetallic strip is supported.

. When the equipment is in operation the heat also heats the bimetallic strip. When the plug passes from the closed position to the open position the bimetallic strip deforms immobilising the plug in the open position.

. When the strip cools it automatically returns to the undeformed configuration allowing the plug to descend. The bimetallic strip may be constructed in such a way that the means for immobilising the plug can be deactivated by exerting a force directly on the plug such as to return it to the closed position. This force may be advantageously exerted directly on the plunger portion of the plug which extends outside the valve body.

. The bimetallic strip may also be constructed in such a way that it may be also conditioned by the action of the user on portion 66 of the plug. In this way the plug can be immobilised in the open position regardless of heat in order to select the operating mode for the equipment.

. Notwithstanding the embodiments illustrated, which constitute possible embodiments, the means for immobilising the plug may advantageously be arranged in such a way that they can be activated and deactivated by an action exerted in the direction of movement of the plug. In other words the plug is immobilised in or released from the position in which the delivery pipe is open through a force which is exerted along the direction of motion of the plug.

. In addition to this, regardless of the embodiment, the means for immobilising the plug may be arranged in such a way that they can be deactivated by applying a force directly to the plug sufficient to return it to the closed position.

. In accordance with a general aspect regardless of the direction of activation or deactivation, the means for immobilising the plug in the open position are advantageously located substantially within the valve body in order to prevent contamination with the components of the beverage, in particular milk. In particular a first portion of the said immobilising means is associated with the plug while a second portion of the said immobilising means is associated with a portion which is fixed, for example to the valve body or preferably to a cap of the said valve body or to the equipment itself.

. In general terms the means for immobilising the plug in the open position may be activated and/or deactivated through the lid of the coffee-maker, that is even when the lid is closed.

. In general terms this invention may relate to a method for making cappuccino using a coffee-maker or moka comprising a boiler, a container for ground coffee and a collection container. This method comprises the stages of:

. Providing the coffee-maker with a quantity of water in the boiler, a quantity of ground coffee in the container for ground coffee and a quantity of milk in the collection container of the coffee-maker,

. Heating the boiler to a predetermined excess pressure with respect to atmospheric pressure in which a plug located along a delivery path for the coffee infusion from the boiler to the collection container opens the said delivery path,

. Immobilising the said plug in the position in which the delivery pipe is open until all the coffee infusion and steam present in the boiler have been delivered,

. In which the said plug is immobilised in or released from the said position in which the delivery pipe is open through a force which is exerted in the direction of movement of the plug.

. In general terms this invention may also relate to a method for foaming milk using a coffee-maker comprising a boiler and a collection container, the said method comprising the stages of:

. Providing the coffee-maker with a predetermined quantity of water in the boiler and a quantity of milk in the coffee-maker's collection container,

. Heating the boiler to a predetermined excess pressure with respect to atmospheric pressure in which a plug located along a delivery path for water from the boiler to the collection container opens the said delivery path,

. Immobilising the said plug in the position in which the delivery pipe is open until all the water and steam present in the boiler have been delivered,

. In which the said plug is immobilised in or released from the said position in which the delivery pipe is open through an action exerted along the direction of movement of the plug.

. In accordance with a possible embodiment this invention may also relate to a method for selectively obtaining a coffee infusion with or without foam through a coffee-maker comprising a boiler, a container for powdered coffee, and a collection container for the coffee infusion.

. This method comprises the stages of:

. Providing the coffee-maker with a quantity of water in the boiler and a quantity of ground coffee in the container for ground coffee,

. Setting the position of a plug located along a delivery path for the water from the boiler to the collection container between a position in which the delivery path is open and one in which it is closed, in which the plug can be immobilised in or released from the open position of the delivery pipe by means of a force exerted in the direction of movement of the plug,

. Heating the boiler to a predetermined excess pressure with respect to atmospheric pressure to deliver a coffee infusion with or without foam depending upon the set position of the plug.

. Further variants are possible with reference to any embodiment described.

. For example the valve means may be attached to the delivery pipe in a different way. Other immobilising means of a snap or interlocking or other form may be provided.

. In addition the valve means may comprise the plug alone mounted floating on the delivery pipe as for example provided in patent EP 932355 incorporated herein for reference in connection with the mounting of the plug on the delivery pipe. In this case the pair of members capable of attracting/repelling each other through magnetic force may be provided between the plug and the lid of the equipment or the delivery pipe.

. In accordance with a possible embodiment opening 36 in lid 32 may be provided with a closure which is for example flexible and/or transparent through which it is possible to act on portion 66 of the plug, but which prevents any escape of liquid. Preferably the dimensions of opening 36 make it possible to open the lid of the equipment without dismantling the plug or portion 66 thereof.

. The lid may possibly be of the conventional type, without an opening, with space being provided within the container for movement of the valve means.

. All the embodiments in which a conduit 56 is provided to provide the outlet 48 from the valve means, this conduit may be made of one piece with the valve body or may be mounted on the same in various configurations. Also in the embodiments in Figures 10-16 conduit 56 may be constructed as specified in Figure 1a.

. Advantageously the means for preventing sucking back may have embodiments other than those illustrated. For example vent means provided with a capillary opening in the valve body or the lid of the valve body instead of in conduit 56 may be provided. In addition to this the vent means may be used in any type of valve means, for example with the plug mounted floatingly in the delivery pipe or with means for immobilising the plug which are different from those described previously.

. The equipment used may be suitable for location on an external source of heat or may be provided with electrical resistances which can be activated by means of a switch or base plate.

. In accordance with one embodiment this invention relates to valve means for equipment for the preparation of a hot beverage, for example comprising at least one first liquid component and one second preferably liquid component which is miscible with the said first component.

. In particular the valve means are capable of being located along the delivery path of the equipment and comprise a plug which can move between a position in which the delivery path is closed and one in which it is open depending upon the pressure within the boiler, and means for immobilising the plug in the open position. Advantageously the means for immobilising the plug comprise at least one pair of members which are capable of attracting/repelling each other through magnetic force. In accordance with a further embodiment the means for immobilising the plug are arranged in such a way that they can be activated and deactivated by a force exerted along the direction of movement of the plug.

. It will be appreciated from the above that provision of equipment or valve means according to this invention makes it possible to achieve greater versatility in use and particularly satisfying beverages.

. The presence of the valve means makes it possible, if activated, to raise the temperature and pressure conditions at the time of delivery and thus the rate of delivery. In addition, by immobilising the plug in the open position while in operation it is possible to make use of delivery of all the steam in the boiler to create turbulence sufficient to cause the beverage to foam, in particular when based on milk.

. The ease of manufacture and operation makes it possible to provide a very versatile coffee-maker in which the means for immobilising the plug in the open position can be activated automatically by movement of the plug during operation or directly by the user in order to set the operating mode of the coffee-maker at the outset.

. All the components of the valve means may be dismantled and cleaned, having regard to use with liquids such as milk which, as is well known, creates problems with deposits and encrustations.

. The advantageous provision of operation in a direction of movement of the plug makes it possible to simplify the structure appreciably and render operation intuitive. The fact that the position of the plug is visible, and makes it possible to set the initial conditions of the valve means, and therefore the type of operation desired, is particularly advantageous.

. Of the embodiments described the provision of magnetic members (or members capable of exerting a magnetic force) is particularly advantageous in that this is reliable, rapidly activatable and deactivatable and is not compromised by the presence of any residues.

. Where emptying of the collection container is delayed, it is possible to prevent the beverage from being undesirably sucked back into the boiler. In fact cooling of the boiler results in a fall in pressure within it which can cause the beverage to be sucked back along the delivery path. This sucking back is particularly undesirable in the case of beverages based on milk which would produce residues and encrustations which are difficult to remove along the delivery path and in the boiler.

. Naturally, the principle of the invention remaining the same, the forms of embodiment and details of construction may be varied widely with respect to those described and illustrated, which have been given purely by way of example, without thereby departing from the scope of the invention as defined in the appended claims.

## Claims

1. Equipment (10) for the preparation of a hot beverage, comprising a boiler (12) designed to contain a liquid component of the said beverage, a collection container (14) and means (22, 20, 28) for defining a delivery path for the said liquid component from the boiler to the collection container,
the said equipment also comprising valve means (40) located along the delivery path for the said liquid component comprising a plug (44) which can move along an axis (X) between a position in which the delivery path is closed and one in which it is open and means (70, 72; 74, 76; 78) to immobilise the plug in the open position, caracterised in that the said means to immobilise the plug are arranged in such a way that they can be activated and deactivated by a force exerted along the direction of movement of the plug.

2. Equipment for the preparation of a hot beverage according to claim 1, in which the said means can be activated by movement of the plug between the closed position and the open position.

3. Equipment for the preparation of a hot beverage according to claim 1 or 2, in which the said plug can move in a direction coinciding with the direction of the force of gravity.

4. Equipment for the preparation of a hot beverage according to one of the preceding claims, in which the said immobilising means comprise at least a pair of members (70, 72) capable of attracting or repelling each other by magnetic force.

5. Equipment for the preparation of a hot beverage according to claim 4, in which a first member (70) of the said pair of members is associated with the plug (44), or is the plug itself, and a second member (72) of the said pair of members is associated with a fixed portion of the said equipment.

6. Equipment for the preparation of a hot beverage according to claim 5, in which the said second member (72) of the said pair of members is associated with a valve body (42) housing the said plug (44).

7. Equipment for the preparation of a hot beverage according to claim 6, in which the said second member (72) of the said pair is mounted on a lid (54) of the said valve body (42).

8. Equipment for the preparation of a hot beverage according to claims 6 or 7, in which the said at least one pair of members (70, 72; 70, 96) are located within the valve body (42).

9. Equipment for the preparation of a hot beverage according to claim 5, in which one member (70) of the said pair of members is associated with the plug (44) and the other member (72, 96) of the said pair of members is associated with a portion of the collection container (14).

10. Equipment for the preparation of a hot beverage according to claim 9, in which the other member (72, 96) of the said pair of members is associated with a lid (32) of the said collection container (14).

11. Equipment for the preparation of a hot beverage according to claims 9 or 10, in which the member (70) of the said pair of members associated with the plug (44) is associated with a portion (66) which extends outside a valve body (42) housing the said plug (44).

12. Equipment for the preparation of a hot beverage according to one of claims 4 to 11, in which the said immobilising means comprise at least two pairs of members (70, 72) capable of interacting with each other through a magnetic flux.

13. Equipment for the preparation of a hot beverage according to one of claims 4 to 12, in which the said immobilising means comprise at least three pairs of members (70, 72) capable of interacting with each other through a magnetic flux located approximately 120° from each other.

14. Equipment for the preparation of a hot beverage according to one of claims 4 to 13, in which the said immobilising means comprise at least one pair of members (70, 72; 70, 96) capable of interacting with each other through a magnetic flux exerting a magnetic force along a vertical direction in the position in which the equipment is used.

15. Equipment (10) for the preparation of a hot beverage according to one of claims 4 to 14, in which the said means for immobilising the plug are arranged in such a way that they can be activated and deactivated by a force exerted along the direction of movement of the plug.

16. Equipment for the preparation of a hot beverage according to one of claims 1 to 3, in which the said immobilising means comprise means (74, 76) capable of forming a nesting connection between the said plug (44) and a fixed portion of the equipment in the position in which the said plug (44) is open.

17. Equipment for the preparation of a hot beverage according to claim 16, in which the said immobilising means comprise means capable of forming a nesting connection between the said plug (44) and a valve body (42) housing the said plug (44).

18. Equipment for the preparation of a hot beverage according to claim 17, in which the said means for forming a nesting connection comprise a first inclined surface (74) of the said plug (44) and a second inclined surface (76) of the said valve body (42), the said first inclined surface having an inclination which is different from that of the said second inclined surface.

19. Equipment for the preparation of a hot beverage according to claim 18, in which the angle of inclination of the first inclined surface (74) of the plug (44) in relation to a direction of movement of the plug is greater than the angle of inclination of the second inclined surface (76) of the valve body (42).

20. Equipment for the preparation of a hot beverage according to claims 18 or 19, in which the first inclined surface (74) and the second inclined surface (76) are frustoconical surfaces.

21. Equipment for the preparation of a hot beverage according to one of claims 1 to 3, in which the said immobilising means comprise a bimetallic strip (78) interacting with the said plug (44) and capable of adopting at least two configurations corresponding to the open and closed position of the plug respectively.

22. Equipment for the preparation of a hot beverage according to claim 21, in which the said bimetallic strip (78) surrounds a portion of the said plug (44) around the direction of movement of the plug.

23. Equipment for the preparation of a hot beverage according to claim 21 or 22, in which the said bimetallic strip (78) is located between the plug (44) and a valve body (42) housing the said plug (44).

24. Equipment for the preparation of a hot beverage according to claim 23, in which the said bimetallic strip (78) is inserted outside the valve body (42) between the valve body and a portion (66) of the plug (44) which extends outside the valve body (42).

25. Equipment for the preparation of a hot beverage according to claim 24, in which the said valve body (42) comprises a projection (79) on which one edge of the bimetallic strip (78) is supported.

26. Equipment for the preparation of a hot beverage according to claim 23, in which the bimetallic strip (78) is inserted within the valve body (42).

27. Equipment for the preparation of a hot beverage according to one of the preceding claims, in which the said delivery path is at least partly defined by a delivery pipe (28) which opens into the said collection container (14) and in which the said valve means (40) are located at the outlet of the said delivery pipe (28).

28. Equipment for the preparation of a hot beverage according to claim 27, in which the said delivery pipe (28) extends at least partly within the collection container (14) along an axis (X) and in which the said valve means (40) are located at the outlet of the said delivery pipe (28) in the prolongation of the said axis (X) .

29. Equipment for the preparation of a hot beverage according to claim 28, in which the said plug (44) can move along the said axis (X).

30. Equipment for the preparation of a hot beverage according to one of claims 27 to 29, in which the said valve means (40) comprise a valve body (42) which houses the plug (40) provided with an inlet (46) capable of being placed in communication with the outlet of the delivery pipe (28) and (48) placed in communication with the said collection container (14).

31. Equipment for the preparation of a hot beverage according to claim 30, in which the said immobilising means are within the said valve body (42).

32. Equipment for the preparation of a hot beverage according to claim 31, in which a first portion of the said immobilising means is associated with the said plug (44).

33. Equipment, for the preparation of a hot beverage according to claim 32, in which a second portion of the said immobilising means is associated with a fixed portion of the said equipment.

34. Equipment for the preparation of a hot beverage according to claim 33, in which a second portion of the said immobilising means is associated with the said valve body (42).

35. Equipment for the preparation of a hot beverage according to claim 34, in which a second portion of the said immobilising means is associated with a lid (54) of the said valve body (42).

36. Equipment for the preparation of a hot beverage according to one of claims 30 to 35, in which the said inlet (46) of the valve body (42) is along the same axis as the said delivery path (28).

37. Equipment for the preparation of a hot beverage according to claim 36, in which the said outlet (48) from the valve body (42) is located laterally at the inlet (46) with respect to the said axis (X) of the delivery valve (28).

38. Equipment for the preparation of a hot beverage according to one of claims 30 to 37, in which the said delivery pipe (28) has an extension within the collection container (14) such as to keep the inlet (46) of the valve body (42) above the surface of the hot beverage present in the collection container (14).

39. Equipment for the preparation of a hot beverage according to claim 38, in which the outlet (48) from the said valve body (42) is located at a level lower than the inlet (46) of the said valve body (42).

40. Equipment for the preparation of a hot beverage according to claim 39, in which the said valve body (42) comprises at least one conduit (56) having a free end defining the said outlet (48) from the valve body (42).

41. Equipment for the preparation of a hot beverage according to claim 40, in which the said conduit (56) extends downwards from a bottom of the said valve body (42).

42. Equipment for the preparation of a hot beverage according to claim 41, in which the entire extent of the said conduit (56) is located below the said inlet (46) of the valve body (42).

43. Equipment for the preparation of a hot beverage according to claim 40, in which the said conduit (56) extends laterally with respect to the valve body (42).

44. Equipment for the preparation of a hot beverage according to one of claims 40 to 43, in which the said conduit (56) is mounted in a movable way on the valve body (42).

45. Equipment for the preparation of a hot beverage according to one of claims 40 to 43, in which the said conduit (56) is of one piece with the valve body (42).

46. Equipment for the preparation of a hot beverage according to one of claims 40 to 45, in which the said conduit (56) is straight.

47. Equipment for the preparation of a hot beverage according to one of claims 40 to 46, in which the said conduit (56) has a terminal portion (58) which is inclined with respect to an attachment portion (60) between the said conduit (56) and the valve body (42).

48. Equipment for the preparation of a hot beverage according to one of claims 40 to 47, in which the said at least one conduit (56) comprises at least one portion (58) parallel to the said axis (X) of the delivery pipe (28).

49. Equipment for the preparation of a hot beverage according to claim 48, in which the said conduit (56) comprises a terminal portion (58) which is inclined with respect to the direction of the said axis (X).

50. Equipment for the preparation of a hot beverage according to claim 49, in which the said terminal portion (58) of the said conduit (56) is inclined in a direction tangential to a circumference centered on the said axis (X) .

51. Equipment for the preparation of a hot beverage according to one of claims 40 to 50, in which the said conduit comprises a nozzle (88) located at the outlet (48) and defining a passage cross-section which is less than the passage cross-section of the conduit (56).

52. Equipment for the preparation of a hot beverage according to one of claims 30 to 51, in which the said valve body (42) comprise means to prevent the beverage from being sucked back into the boiler.

53. Equipment for the preparation of a hot beverage according to claim 52, in which the said means to prevent the beverage from being sucked back into the boiler comprise vent means.

54. Equipment for the preparation of a hot beverage according to claim 53, in which the said vent means comprise a capillary opening (62).

55. Equipment for the preparation of a hot beverage according to claim 54, when dependent on one of claims 40 to 51, in which the said capillary opening (62) is made in the same conduit (56) at a level such as will remain above the level of the hot beverage present in the collection container (14).

56. Equipment for the preparation of a hot beverage according to one of claims 30 to 55, in which the said valve body (42) in which the plug (44) is housed is movably mounted on the delivery pipe (28).

57. Equipment for the preparation of a hot beverage according to claim 56, in which a seat (50) of the valve body (42) is removably mounted on the delivery pipe (28) and a cap (54) is movably mounted on the said seat (50).

58. Equipment for the preparation of a hot beverage according to claim 56 or 57, in which the said cap (54) comprises a bayonet connection with the said delivery pipe.

59. Equipment for the preparation of a hot beverage according to claim 58, in which the said bayonet connection is provided between the said delivery pipe (28) and an annular portion (84) of the said cap (54) which is designed to enclose externally an end portion of the delivery pipe (28).

60. Equipment for the preparation of a hot beverage according to claim 58 or 59, in which the said bayonet connection comprises a groove (87a) in the said cap (54) which is capable of receiving a tooth (87) via a passage (87b), the said tooth being of one piece with the delivery pipe (28).

61. Equipment for the preparation of a hot beverage according to claim 60, in which the said bayonet connection comprises a guide and immobilising ring (86) inserted between the seat (50) and the delivery pipe (28), the said guide and immobilising ring (86) comprising the said tooth (87).

62. Equipment for the preparation of a hot beverage according to one of the preceding claims, in which the said means for immobilising the plug are arranged in such a way that they can be deactivated by exerting a force directly on the said plug such as to return it to the closed position.

63. Equipment for the preparation of a hot beverage according to one of the preceding claims, in which the said valve means (40) comprise a valve body (42) in which is housed the plug (44) provided with an inlet (46) capable of being placed in communication with the outlet of the said delivery path and an outlet (48) which is capable of being placed in communication with the said collection container (14) and in which the said plug (44) comprises a portion (66) which extends outside the valve body (42).

64. Equipment for the preparation of a hot beverage according to claim 63, in which the said portion (66) which extends outside the valve body (42) is in the form of a plunger.

65. Equipment for the preparation of a hot beverage according to claim 63 or 64, in which the said portion (66) extending-outside the valve body (42) has a portion having dimensions greater than the dimension of an opening (68) of the said valve body (42) through which the said plug (44) extends.

66. Equipment for the preparation of a hot beverage according to one of claims 63 to 65, in which the said portion (66) extending outside the valve body (42) is mounted on the said plug (44) through an opening (68) in the said valve body (42).

67. Equipment for the preparation of a hot beverage according to claim 66, in which the said portion (66) which extends outside the valve body (42) is threaded onto the said plug (44).

68. Equipment for the preparation of a hot beverage according to one of the preceding claims, comprising a lid (32) hinged to the collection container (14) and provided with an opening (36) capable of receiving a portion (66) of the said plug (44).

69. Equipment for the preparation of a hot beverage according to claim 68 when dependent upon one of claims 63 to 67, in which the said opening (36) is capable of receiving a portion (66) of the said plug (44) extending outside the valve body (42).

70. Equipment for the preparation of a hot beverage according to claim 68 or 69, in which the said opening (36) is central to the lid (32) and coaxial with a delivery pipe (28) defining a portion of the said delivery path.

71. Equipment for the preparation of a hot beverage according to one of claims 68 to 70, in which the said lid (32) comprises a graspable member (38) located in an off-center position on the lid.

72. Equipment for the preparation of a hot beverage according to claim 71, in which the said graspable member (38) is located between the said opening (36) and a handle (34) of the said equipment.

73. Equipment for the preparation of a hot beverage according to claim 72, in which the said graspable member (38) is located on a projecting portion (33) of the lid (32).

74. Valve means (40) capable of being used in equipment (10) for the preparation of a hot beverage in accordance with one of claims 1 to 73, said valve means comprising a plug (44) which can move along an axis (X) between a position in which the delivery path is closed and one in which it is open and means to immobilise the plug in the open position wherein said means to immobilise the plug are arranged in such a way that they can be activated and deactivated by a force exerted along the direction of movement of the plug.

75. Method for preparing a hot beverage comprising at least a first liquid component using a coffee-maker (10) comprising a boiler (12) and a collection container (14), the said method comprising the stages of:
providing the coffee-maker with a quantity of the said first liquid component in the boiler (12),
heating the boiler (12) up to a predetermined excess pressure with respect to the atmospheric pressure in which a plug (44) located along a delivery path for the first liquid component from the boiler to the collection container opens the said delivery path moving an axis (x),
immobilising the said plug in the position in which the delivery path is open until all the first liquid component and the steam present in the boiler have been delivered,
in which the said plug (44) is immobilised in or released from the said position in which the delivery path is open through a force which is exerted in the direction of movement of the plug.

76. Method according to claim 75 to prepare cappuccino using a coffee-maker (10) comprising a boiler (12), a container for ground coffee (18) and a collection container (14), the said method comprising the stages of:
providing the coffee-maker with a quantity of water in the boiler (12), a quantity of ground coffee in the container for ground coffee (18) and a quantity of milk in the collection container (14) of the coffee-maker,
heating the boiler (10) up to a predetermined excess pressure with respect to atmospheric pressure in which a plug (44) located along a delivery path for the coffee infusion from the boiler to the collection container (14) opens the said delivery path,
immobilising the said plug (44) in the position in which the delivery path (28) is open until all the coffee infusion and the steam present in the boiler (10) is delivered,
in which the said plug (44) is immobilised in or released from the said position in which the delivery path is open through a force exerted in the direction of movement of the plug.

77. Method according to claim 75 to foam milk using a coffee-maker (10) comprising a boiler (12) and a collection container (14), the said method comprising the stages of:
providing the coffee-maker with a quantity of water in the boiler (12) and a quantity of milk in the collection container (14) of the coffee-maker,
heating the boiler to a predetermined excess pressure with respect to atmospheric pressure in which a plug (44) located along a delivery path for water from the boiler to the collection container opens the said delivery path, immobilising the said plug (44) in a position in which the delivery path is open until all the water and the steam present in the boiler is delivered,
in which the said plug is immobilised in or released from the said position in which the delivery path is open through a force exerted along the direction of movement of the plug.

78. Method according to claim 75, for selectively obtaining a coffee infusion with or without foam using a coffee-maker (10) comprising a boiler (12), a container (18) for the coffee powder, a collection container (14) for the coffee infusion, the said method comprising the stages of:
providing the coffee-maker with a quantity of water in the boiler and a quantity of ground coffee in the container for ground coffee,
setting the position of a plug located along a delivery path for water from the boiler to the collection container between a position in which the delivery path is closed and one which it is open, in which the plug is capable of being immobilised in the position in which the delivery pipe is open through a force exerted in the direction of movement of the plug,
heating the boiler to an excess pressure with respect to atmospheric pressure in order to deliver a coffee infusion with or without foam depending upon the set position of the plug.

## Patentansprüche

1. Ausrüstung (10) für die Zubereitung eines Heißgetränks, umfassend einen Boiler (12), der ausgelegt ist, um eine flüssige Komponente des Getränks zu enthalten, ein Auffanggefäß (14) und Mittel (22, 20, 28), um einen Zuführpfad für die flüssige Komponente von dem Boiler zu dem Auffanggefäß zu definieren,
wobei die Ausrüstung auch ein Ventilmittel (40) umfasst, das entlang dem Zuführpfad für die flüssige Komponente angeordnet ist, und das einen Stopfen (44) umfasst, welcher sich entlang einer Achse (x) zwischen einer Position, in der der Zuführpfad geschlossen ist, und einer Position, in der er offen ist, bewegen kann, sowie Mittel (70, 72; 74, 76; 78), um den Stopfen in der geöffneten Position zu fest zu halten,
**dadurch gekennzeichnet, dass** die Mittel zum Festhalten des Stopfens in einer Weise angeordnet sind, dass sie durch eine Kraft, die entlang der Bewegungsrichtung des Stopfens ausgeübt wird, aktiviert und deaktiviert werden können.

2. Ausrüstung für die Zubereitung eines Heißgetränks nach Anspruch 1, wobei das Mittel durch Bewegen des Stopfens zwischen der geschlossenen Position und der geöffneten Position aktiviert werden kann.

3. Ausrüstung für die Zubereitung eines Heißgetränks nach Anspruch 1 oder 2, wobei sich der Stopfen in einer Richtung bewegen kann, die mit der Richtung der Schwerkraft übereinstimmt

4. Ausrüstung für die Zubereitung eines Heißgetränks nach einem der vorstehenden Ansprüche, wobei die Mittel zum Festhalten zumindest ein Elementepaar (70, 72) umfasst, die in der Lage sind, einander durch magnetische Kraft anzuziehen oder abzustoßen.

5. Ausrüstung für die Zubereitung eines Heißgetränks nach Anspruch 4, wobei ein erstes Element (70) des Elementepaares mit dem Stopfen (44) verbunden ist, oder wobei es selbst der Stopfen ist, und ein zweites Element (72) des Elementepaares mit einem festen Teil der Ausrüstung verbunden ist.

6. Ausrüstung für die Zubereitung eines Heißgetränks nach Anspruch 5, wobei das zweite Element (72) des Elementepaares mit einem Ventilkörper (42) verbunden ist, in dem der Stopfen (44) gelagert ist.

7. Ausrüstung für die Zubereitung eines Heißgetränks nach Anspruch 6, wobei das zweite Element (72) des Paars an einem Deckel (54) des Ventilkörpers (42) angeordnet ist.

8. Ausrüstung für die Zubereitung eines Heißgetränks nach Anspruch 6 oder 7, wobei das zumindest eine Elementepaar (70, 72; 70, 96) innerhalb des Ventilkörpers (42) angeordnet sind.

9. Ausrüstung für die Zubereitung eines Heißgetränks nach Anspruch 5, wobei ein Element (70) des Elementepaares mit dem Stopfen (44) verbunden ist und das andere Element (72, 96) des Elementepaares mit einem Abschnitt des Auffanggefäßes (14) verbunden ist.

10. Ausrüstung für die Zubereitung eines Heißgetränks nach Anspruch 9, wobei das andere Element (72, 96) des Elementepaares mit einem Deckel (32) des Auffanggefäßes (14) verbunden ist.

11. Ausrüstung für die Zubereitung eines Heißgetränks nach Anspruch 9 oder 10, wobei das Element (70) des Elementepaares, das mit dem Stopfen (44) verbunden ist, mit einem Abschnitt (66) verbunden ist, der aus einem Ventilkörper (42), in dem der Stopfen (44) gelagert ist, herausragt.

12. Ausrüstung für die Zubereitung eines Heißgetränks nach einem der Ansprüche 4 bis 11, wobei die Mittel zum Festhalten zumindest zwei ElezxAentepaare (70, 72) umfassen, die geeignet sind, miteinander durch einen magnetischen Fluss zu interagieren.

13. Ausrüstung für die Zubereitung eines Heißgetränks nach einem der Ansprüche 4 bis 12, wobei die Mittel zum Festhalten zumindest drei Paare von Elementen (70, 72) umfassen, die geeignet sind, miteinander durch einen magnetischen Fluss zu interagieren, und die im Abstand von näherungsweise 120 ° voneinander angeordnet sind.

14. Ausrüstung für die Zubereitung eines Heißgetränks nach einem der Ansprüche 4 bis 13, wobei die Mittel zum Festhalten ein Elementepaar (70, 72; 70, 96) umfassen, das geeignet ist, miteinander durch einen magnetischen Fluss zu interagieren, der eine magnetische Kraft entlang einer vertikalen Richtung in der Position ausübt, in der die Ausrüstung verwendet wird.

15. Ausrüstung (10) für die Zubereitung eines Heißgetränks nach einem der Ansprüche 4 bis 14, wobei die Mittel zum Festhalten des Stopfens in einer Weise angeordnet sind, dass sie durch eine Kraft, die entlang der Bewegungsrichtung des Stopfens ausgeübt, aktiviert und deaktiviert werden können.

16. Ausrüstung für die Zubereitung eines Heißgetränks nach einem der Ansprüche 1 bis 3, wobei die Mittel zum Festhalten Mittel (74, 76) umfassen, die geeignet sind, eine einhüllende Verbindung zwischen dem Stopfen (44) und einem festen Abschnitt der Ausrüstung in der Position zu bilden, in welcher der Stopfen (44) geöffnet ist.

17. Ausrüstung für die Zubereitung eines Heißgetränks nach Anspruch 16, wobei die Mittel zum Festhalten Mittel umfassen, die geeignet sind, eine einhüllende Verbindung zwischen dem Stopfen (44) und einem Ventilkörper (42), in dem der Stopfen (44) gelagert ist, zu bilden.

18. Ausrüstung für die Zubereitung eines Heißgetränks nach Anspruch 17, wobei die Mittel zur Bildung einer einhüllenden Verbindung eine erste geneigte Oberfläche (74) des Stopfens (44) und eine zweite geneigte Oberfläche (76) des Ventilkörpers (42) umfassen, wobei die erste geneigte Oberfläche eine Neigung aufweist, die sich von der der zweiten geneigten Oberfläche unterscheidet.

19. Ausrüstung für die Zubereitung eines Heißgetränks nach Anspruch 18, wobei der Neigungswinkel der ersten geneigten Oberfläche (74) des Stopfens (44) in Bezug auf eine Bewegungsrichtung des Stopfens größer ist als der Neigungswinkel der zweiten geneigten Oberfläche (76) des Ventilkörpers (42).

20. Ausrüstung für die Zubereitung eines Heißgetränks nach Anspruch 18 oder 19, wobei die erste geneigte Oberfläche (74) und die zweite geneigte Oberfläche (76) kegelstumpfförmige Oberflächen sind.

21. Ausrüstung für die Zubereitung eines Heißgetränks nach einem der Ansprüche 1 bis 3, wobei die Mittel zum Festhalten einen Bimetallstreifen (78) umfassen, der mit dem Stopfen (44) interagiert und geeignet ist, zumindest zwei Konfigurationen einzunehmen, die der geöffneten beziehungsweise der geschlossenen Position des Stopfens entsprechen.

22. Ausrüstung für die Zubereitung eines Heißgetränks nach Anspruch 21, wobei der Bimetallstreifen (78) einen Teil des Stopfens (44) in Bewegungsrichtung des Stopfens umgibt.

23. Ausrüstung für die Zubereitung eines Heißgetränks nach Anspruch 21 oder 22, wobei der Bimetallstreifen (78) zwischen dem Stopfen (44) und einem Ventilkörper (42), in dem der Stopfen (44) gelagert ist, angeordnet ist.

24. Ausrüstung für die Zubereitung eines Heißgetränks nach Anspruch 23, wobei der Bimetallstreifen (78) außerhalb des Ventilkörpers (42) zwischen dem Ventilkörper und einem Abschnitt (66) des Stopfens (44) eingefügt ist, der aus dem Ventilkörper (42) herausragt.

25. Ausrüstung für die Zubereitung eines Heißgetränks nach Anspruch 24, wobei der Ventilkörper (42) einen Überstand (79) umfasst, von dem eine Kante des Bimetallstreifens (78) getragen wird.

26. Ausrüstung für die Zubereitung eines Heißgetränks nach Anspruch 23, wobei der Bimetallstreifen (78) innerhalb des Ventilkörpers (42) eingefügt ist.

27. Ausrüstung für die Zubereitung eines Heißgetränks nach einem der vorstehenden Ansprüche, wobei der Zuführpfad zumindest teilweise durch eine Zuführleitung (28) definiert ist, die sich in das Auffanggefäß (14) öffnet, und wobei die Ventilmittel (40) an dem Auslass der Zuführleitung (28) angeordnet sind.

28. Ausrüstung für die Zubereitung eines Heißgetränks nach Anspruch 27, wobei die Zuführleitung (28) sich zumindest teilweise in das Auffanggefäß (14) entlang einer Achse (X) erstreckt und wobei die Ventilmittel (40) an dem Auslass der Zuführleitung (28) in der Verlängerung der Achse (X) angeordnet sind.

29. Ausrüstung für die Zubereitung eines Heißgetränks nach Anspruch 28, wobei sich der Stopfen (44) entlang der Achse (X) bewegen kann.

30. Ausrüstung für die Zubereitung eines Heißgetränks nach einem der Ansprüche 27 bis 29, wobei die Ventilmittel (40) einen Ventilkörper (42) umfassen, in welchem der Stopfen (40) gelagert ist, der mit einem Einlass (46), der geeignet ist, in Verbindung mit dem Auslass der Zuführleitung (28) zu stehen, und mit einem Auslass (48), der in Verbindung mit dem Auffanggefäß (14) steht, ausgestattet ist.

31. Ausrüstung für die Zubereitung eines Heißgetränks nach Anspruch 30, wobei sich die Mittel zum Festhalten innerhalb des Ventilkörpers (42) befinden.

32. Ausrüstung für die Zubereitung eines Heißgetränks nach Anspruch 31, wobei ein erster Abschnitt des Mittels zum Festhalten mit dem Stopfen (44) verbunden ist.

33. Ausrüstung für die Zubereitung eines Heißgetränks nach Anspruch 32, wobei ein zweiter Abschnitt der Mittel zum Festhalten mit einem festen Abschnitt der Ausrüstung verbunden ist.

34. Ausrüstung für die Zubereitung eines Heißgetränks nach Anspruch 33, wobei ein zweiter Abschnitt der Mittel zum Festhalten mit dem Ventilkörper (42) verbunden ist.

35. Ausrüstung für die Zubereitung eines Heißgetränks nach Anspruch 34, wobei ein zweiter Abschnitt der Mittel zum Festhalten mit einem Deckel (54) des Ventilkörpers (42) verbunden ist.

36. Ausrüstung für die Zubereitung eines Heißgetränks nach einem der Ansprüche 30 bis 35, wobei der Einlass (46) des Ventilkörpers (42) sich entlang der gleichen Achse wie die Zuführleitung (28) befindet.

37. Ausrüstung für die Zubereitung eines Heißgetränks nach Anspruch 36, wobei der Auslass (48) des Ventilkörpers (42) seitlich des Einlasses (46) bezüglich der Achse (X) der Zuführleitung (28) angeordnet ist.

38. Ausrüstung für die Zubereitung eines Heißgetränks nach einem der Ansprüche 30 bis 37, wobei die Zuführleitung (28) eine Verlängerung innerhalb des Auffanggefäßes (14) aufweist, um den Einlass (46) des Ventilkörpers (42) über der Oberfläche des Heißgetränks, das in dem Auffanggefäß (14) vorhanden ist, zu halten.

39. Ausrüstung für die Zubereitung eines Heißgetränks nach Anspruch 38, wobei der Auslass (48) aus dem Ventilkörper (42) in einer Höhe angeordnet ist, die unterhalb des Einlasses (46) des Ventilkörpers (42) liegt.

40. Ausrüstung für die Zubereitung eines Heißgetränks nach Anspruch 39, wobei der Ventilkörper (42) zumindest eine Leitung (56) mit einem freien Ende umfasst, welche den Auslass (48) aus dem Ventilkörper (42) definiert.

41. Ausrüstung für die Zubereitung eines Heißgetränks nach Anspruch 40, wobei sich die Leitung (56) von einem Boden des Ventilkörpers (42) nach unten erstreckt

42. Ausrüstung für die Zubereitung eines Heißgetränks nach Anspruch 41, wobei die gesamte Leitung (56) unterhalb des Einlasses (46) des Ventilkörpers (42) angeordnet ist.

43. Ausrüstung für die Zubereitung eines Heißgetränks nach Anspruch 40, wobei sich die Leitung (56) bezüglich des Ventilkörpers (42) seitlich erstreckt.

44. Ausrüstung für die Zubereitung eines Heißgetränks nach einem der Ansprüche 40 bis 43, wobei die Leitung (56) in beweglicher Weise an dem Ventilkörper (42) angeordnet ist.

45. Ausrüstung für die Zubereitung eines Heißgetränks nach einem der Ansprüche 40 bis 43, wobei die Leitung (56) einstückig mit dem Ventilkörper (42) gefertigt ist.

46. Ausrüstung für die Zubereitung eines Heißgetränks nach einem der Ansprüche 40 bis 45, wobei die Leitung (56) gerade ist.

47. Ausrüstung für die Zubereitung eines Heißgetränks nach einem der Ansprüche 40 bis 46, wobei die Leitung (56) einen Endabschnitt (58) aufweist, der bezüglich eines Anschlussabschnitts (60) zwischen der Leitung (56) und dem Ventilkörper (42) geneigt ist.

48. Ausrüstung für die Zubereitung eines Heißgetränks nach einem der Ansprüche 40 bis 47, wobei die zumindest eine Leitung (56) zumindest einen Abschnitt (58) umfasst, der zu der Achse (X) der Zuführleitung (28) parallel ist.

49. Ausrüstung für die Zubereitung eines Heißgetränks nach Anspruch 48, wobei die Leitung (56) einen Endabschnitt (58) umfasst, der in Bezug bezüglich der Richtung (X) geneigt ist.

50. Ausrüstung für die Zubereitung eines Heißgetränks nach Anspruch 49, wobei der Endabschnitt (58) der Leitung (56) in einer Richtung geneigt ist, die tangential zu einem Umfang ist, in dessen Zentrum die Achse (X) liegt.

51. Ausrüstung für die Zubereitung eines Heißgetränks nach einem der Ansprüche 40 bis 50, wobei die Leitung eine Düse (88) umfasst, die an dem Auslass (48) angeordnet ist und die einen Durchgangsquerschnitt begrenzt, der kleiner als der Durchgangsquerschnitt der Leitung (56) ist.

52. Ausrüstung für die Zubereitung eines Heißgetränks nach einem der Ansprüche 30 bis 51, wobei der Ventilkörper (42) Mittel umfasst, um zu verhindern, dass das Getränk zurück in den Boiler gesogen wird.

53. Ausrüstung für die Zubereitung eines Heißgetränks nach Anspruch 52, wobei die Mittel, die verhindern, dass das Getränk zurück in den Boiler gesogen wird, Entlüftungsmittel umfassen.

54. Ausrüstung für die Zubereitung eines Heißgetränks nach Anspruch 53, wobei die Entlüftungsmittel eine Kapillaröffnung (62) umfassen.

55. Ausrüstung für die Zubereitung eines Heißgetränks nach Anspruch 54, falls abhängig von einem der Ansprüche 40 bis 51, wobei die Kapillaröffnung (62) in der gleichen Leitung (56) in einer Höhe ausgebildet ist, die über der Höhe des Heißgetränks, das in dem Auffanggefäß (14) vorhanden ist, bleiben wird.

56. Ausrüstung für die Zubereitung eines Heißgetränks einem der Ansprüche 30 bis 55, wobei der Ventilkörper, in dem der Stopfen (44) gelagert ist, beweglich auf der Zuführleitung (28) angeordnet ist.

57. Ausrüstung für die Zubereitung eines Heißgetränks nach Anspruch 56, wobei ein Sitz (50) des Ventilkörpers (42) lösbar an der Zuführleitung (28) angeordnet ist, und ein Deckel (54) beweglich auf dem Sitz (50) angeordnet ist.

58. Ausrüstung für die Zubereitung eines Heißgetränks nach Anspruch 56 oder 57,
wobei der Deckel (54) eine Bajonettverbindung mit der Zuführleitung umfasst.

59. Ausrüstung für die Zubereitung eines Heißgetränks nach Anspruch 58, wobei die Bajonettverbindung zwischen der Zuführleitung (28) und einem ringförmigen Abschnitt (84) des Deckels (54) vorgesehen ist, der so gestaltet ist, dass er außen einen Endabschnitt der Zuführleitung (28) einschließt.

60. Ausrüstung für die Zubereitung eines Heißgetränks nach Anspruch 58 oder 59,
wobei der Bajonettverschluss eine Nut (87a) in dem Deckel (54) umfasst, die geeignet ist, einen Zahn (87) über eine Passage (87b) aufzunehmen, wobei der Zahn einstückig mit der Zuführleitung (28) gefertigt ist.

61. Ausrüstung für die Zubereitung eines Heißgetränks nach Anspruch 60, wobei der Bajonettverschluss eine Führung und einen Haltering (86) umfasst, der zwischen den Sitz (50) und die Zuführ1eitung (28) eingefügt ist, wobei die Führung und der Haltering (86) den Zahn (87) umfassen.

62. Ausrüstung für die Zubereitung eines Heißgetränks nach einem der vorstehenden Ansprüche, wobei die Mittel zum Festhalten des Stopfens in einer Weise angeordnet sind, dass sie deaktiviert werden können, indem eine Kraft direkt auf den Stopfen ausgeübt wird, so dass er in die geschlossene Position zurückkehrt.

63. Ausrüstung für die Zubereitung eines Heiß getränks nach einem der vorstehenden Ansprüche, wobei die Ventilmittel (40) einen Ventilkörper (42) umfassen, in dem der Stopfen (44) gelagert ist, der mit einem Einlass (46), der geeignet ist, in Verbindung mit dem Auslass des Zuführpfads angeordnet zu werden, und mit einem Auslass (48), der in Verbindung mit dem Auffanggefäß (14) angeordnet werden kann, ausgestattet ist, und wobei der Stopfen (44) einen Abschnitt (66) umfasst, der aus dem Ventilkörper (42) herausragt.

64. Ausrüstung für die Zubereitung eines Heißgetränks nach Anspruch 63, wobei der Abschnitt (66), der sich aus dem Ventilkörper (42) heraus erstreckt, die Form eines Tauchkolbens aufweist.

65. Ausrüstung für die Zubereitung eines Heißgetränks nach Anspruch 63 oder 64, wobei der Abschnitt (66), der sich aus dem Ventilkörper (42) heraus erstreckt, einen Abschnitt mit Abmessungen aufweist, die größer sind als die Abmessungen einer Öffnung (68) des Ventilkörpers (42), durch den sich der Stopfen (44) heraus erstreckt.

66. Ausrüstung für die Zubereitung eines Heißgetränks nach einem der Ansprüche 63 bis 65, wobei der Abschnitt (66), der sich aus dem Ventilkörper (42) heraus erstreckt, durch eine Öffnung (68) in dem Ventilkörper (42) an dem Stopfen (44) angeordnet ist.

67. Ausrüstung für die Zubereitung eines Heißgetränks nach Anspruch 66, wobei der Abschnitt (66) der sich aus dem Ventilkörper (42) heraus erstreckt, auf den Stopfen (44) geschraubt ist.

68. Ausrüstung für die Zubereitung eines Heißgetränks nach einem der vorstehenden Ansprüche, umfassend einen Deckel (32) der drehgelenkig an dem Auffanggefäß (14) angeordnet ist und der mit einer Öffnung (36) ausgestattet ist, die geeignet ist, einen Abschnitt (66) des Stopfens (44) aufzunehmen.

69. Ausrüstung für die Zubereitung eines Heißgetränks nach Anspruch 68, falls von einem der Ansprüche 63 bis 67 abhängig, wobei die Öffnung (36) einen Abschnitt (66) des Stopfens (44), der sich aus dem Ventilkörper (42) heraus erstreckt, aufnehmen kann.

70. Ausrüstung für die Zubereitung eines Heißgetränks nach Anspruch 68 oder 69, wobei sich die Öffnung (36) im Zentrum des Deckels (32) befindet und koaxial zu einer Zuführleitung (28) ist, die einen Abschnitt des Zuführpfads bildet.

71. Ausrüstung für die Zubereitung eines Heißgetränks nach einem der Ansprüche 68 bis 70, wobei der Deckel (32) ein Greifelement (38) umfasst, das in einer exzentrischen Position auf dem Deckel angeordnet ist.

72. Ausrüstung für die Zubereitung eines Heißgetränks nach Anspruch 71, wobei das Greifelement (38) zwischen der Öffnung (36) und einem Griff (34) der Ausrüstung angeordnet ist.

73. Ausrüstung für die Zubereitung eines Heißgetränks nach Anspruch 72, wobei das Greifelement (38) an einem vorstehenden Abschnitt (33) des Deckels (32) angeordnet ist.

74. Ventilmittel (44), die in der Ausrüstung (10) für die Zubereitung eines Heißgetränks nach einem der Ansprüche 1 bis 73 verwendet werden können, wobei die Ventilmittel einen Stopfen (44), der sich entlang einer Achse (X) zwischen einer Position, in der der Zuführpfad geschlossen ist, und einer Position, in der er geöffnet ist, bewegen kann, und Mittel, um den Stopfen in der geöffneten Position festzuhalten, umfassen,
wobei die Mittel zum Festhalten des Stopfens in einer Weise angeordnet sind, dass sie durch eine Kraft, die entlang der Bewegungsrichtung des Stopfens ausgeübt wird, aktiviert und deaktiviert werden können.

75. Verfahren zum Herstellen eines Heißgetränks, das zumindest einen ersten flüssigen Bestandteil umfasst, wobei eine Kaffeemaschine (10) verwendet wird, die einen Boiler (12) und ein Auffanggefäß (14) umfasst, wobei das Verfahren die folgenden Schritte umfasst:
Befüllen des Boilers (12) in der Kaffeemaschine mit einer Menge des ersten flüssigen Bestandteils,
Erhitzen des Boilers (12) bis zu einem vorgegebenen Überdruck bezüglich des Atmosphärendruckes, wobei ein Stopfen (44), der entlang eines Zuführpfads für den ersten flüssigen Bestandteil auf dem Boiler in das Auffanggefäß angeordnet ist, den Zuführpfad öffnet, indem er sich entlang einer Achse (X) bewegt,
Festhalten des Stopfens in der Position, in welcher der Zuführpfad geöffnet ist, bis der gesamte erste flüssige Bestandteil und der Dampf, der in dem Boiler vorhanden ist, zugeführt worden sind,
wobei der Stopfen (44) in der Position, in welcher der Zuführpfad geöffnet ist, durch eine Kraft, die in der Bewegungsrichtung des Stopfens ausgeübt wird festgehalten oder losgelassen wird.

76. Verfahren nach Anspruch 75 zum Zubereiten eines Cappuccino unter Verwendung einer Kaffeemaschine (10), die einen Boiler (12), einen Behälter für gemahlenen Kaffee (18) und ein Auffanggefäß (14) umfasst,
wobei das Verfahren die folgenden Schritte umfasst:
Befüllen des Boilers (12) der Kaffeemaschine mit einem Quantum Wasser, des Behälters für gemahlenen Kaffee (18) mit einem Quantum gemahlenen Kaffees und des Auffanggefäßes (14) der Kaffeemaschine mit einem Quantum Milch,
Aufheizen des Boilers (10) auf einen vorgegebenen Überdruck bezüglich des Atmosphärendrucks, bei dem ein Stopfen (44), der entlang einem Zuführpfad für den Kaffeeaufguss aus dem Boiler zu dem Auffanggefäß (14) angeordnet ist, den Zuführpfad öffnet,
Festhalten des Stopfens (44) in der Position, in welcher der Zuführpfad (28) geöffnet ist, bis der gesamte Aufguss und der Dampf, der in dem Boiler (10) vorhanden ist, zugeführt worden ist,
wobei der Stopfen (44) in der Position, in welcher der Zuführpfad geöffnet ist, durch eine Kraft, die in der Bewegungsrichtung des Stopfens ausgeübt wird, festgehalten oder losgelassen wird.

77. Verfahren nach Anspruch 75, um Milch unter Verwendung einer Kaffeemaschine (10) aufzuschäumen, die einen Boiler (12) und ein Auffanggefäß (14) umfasst, wobei das Verfahren die folgenden Schritte umfasst:
Versorgen der Kaffeemaschine mit einer Menge Wasser in dem Boiler (12) und einer Menge Milch in dem Auffanggefäß (14) der Kaffeemaschine,
Aufheizen des Boilers auf einen vorgegebenen Überdruck in Bezug auf den atmosphärischen Druck, bei dem ein Stopfen (44), der entlang eines Zuführpfads für Wasser von dem Boiler zu dem Auffanggefäß angeordnet ist, den Zuführpfad öffnet, Festhalten des Stopfens (44) in einer Position, in welcher der Zuführpfad geöffnet ist, bis das gesamte Wasser und der Dampf, der in dem Boiler vorliegt, zugeführt worden ist,
wobei der Stopfen in der Position, in welcher der Zuführpfad geöffnet ist, durch eine Kraft, die entlang der Bewegungsrichtung des Stopfens ausgeübt wird, festgehalten oder losgelassen wird.

78. Verfahren nach Anspruch 75, um selektiv einen Kaffeeaufguss mit oder ohne Schaum unter Verwendung einer Kaffeemaschine (10) zu erhalten, die einen Boiler (12), einen Behälter (18) für das Kaffeepulver, ein Auffanggefäß (14) für den Kaffeeaufguss umfasst, wobei das Verfahren die folgenden Schritte umfasst:
Versorgen der Kaffeemaschine mit einer Menge Wasser in dem Boiler und einer Menge gemahlenen Kaffee in dem Behälter für gemahlenen Kaffee,
Einstellen der Position eines Stopfens, der entlang eines Zuführpfads für Wasser von dem Boiler zu dem Auffanggefäß angeordnet ist, zwischen einer Position, in welcher der Zuführpfad geschlossen ist, und einer Position, in welche er offen ist, wobei der Stopfen in der Position, in welcher die Zuführleitung geöffnet ist, durch eine Kraft, die in der Bewegungsrichtung des Stopfens ausgeübt wird, festgehalten werden kann, Aufheizen des Boilers auf einen Überdruck bezüglich des Atmosphärendrucks, um einen Kaffeeaufguss mit oder ohne Schaum abhängig von der eingestellten Position des Stopfens auszugeben.

## Revendications

1. Appareil (10) pour la préparation d'une boisson chaude, comportant un générateur de vapeur (12) conçu pour contenir un constituant liquide de ladite boisson, un récipient collecteur (14) et des moyens (22, 20, 28) destinés à définir une voie de distribution pour ledit constituant liquide depuis le générateur de vapeur jusqu'au récipient collecteur,
ledit appareil comportant aussi un moyen à valve (40) placé le long de la voie de distribution pour ledit constituant liquide, comportant un obturateur (44) qui peut se déplacer le long d'un axe (X) entre une position dans laquelle la voie de distribution est fermée et une position dans laquelle elle est ouverte et des moyens (70, 72 ; 74, 76 ; 78) destinés à immobiliser l'obturateur dans la position ouverte, **caractérisé en ce que**
lesdits moyens destinés à immobiliser l'obturateur sont agencés d'une manière telle qu'ils peuvent être activés et désactivés par une force exercée suivant la direction du mouvement de l'obturateur_

2. Appareil pour la préparation d'une boisson chaude selon la revendication 1, dans lequel lesdits moyens peuvent être activés par un mouvement de l'obturateur entre la position fermée et la position ouverte.

3. Appareil pour la préparation d'une boisson chaude selon la revendication 1 ou 2, dans lequel ledit obturateur peut se déplacer dans une direction coïcidant avec la direction de la force de la gravité.

4. Appareil pour la préparation d'une boisson chaude selon l'une des revendications précédentes, dans lequel lesdits moyens d'immobilisation comprennent au moins une paire d'éléments (70, 72) capables de s'attirer ou de se repousser mutuellement par une force magnétique.

5. Appareil pour la préparation d'une boisson chaude selon la revendication 4, dans lequel un premier élément (70) de ladite paire d'éléments est associé à l'obturateur (44), ou est l'obturateur lui-même, et un second élément (72) de ladite paire d'éléments est associé à une partie fixe dudit appareil.

6. Appareil pour la préparation d'une boisson chaude selon la revendication 5, dans lequel ledit second élément (72) de ladite paire d'éléments est associé à un corps de valve (42) logeant ledit obturateur (44).

7. Appareil pour la préparation d'une boisson chaude selon la revendication 6, dans lequel ledit second élément (72) de ladite paire est monté sur un couvercle (54) dudit corps de valve (42);

8. Appareil pour la préparation d'une boisson chaude selon la revendication 6 ou 7, dans lequel ladite, au moins une, paire d'éléments (70, 72; 70, 96) est placée à l'intérieur du corps de valve (42);

9. Appareil pour la préparation d'une boisson chaude selon la revendication 5, dans lequel un élément (70) de ladite paire d'éléments est associé à l'obturateur (44) et l'autre élément (72, 96) de ladite paire d'éléments est associé à une partie du récipient collecteur (14).

10. Appareil pour la préparation d'une boisson chaude selon la revendication 9, dans lequel l'autre élément (72, 90) de ladite paire d'éléments est associé à un couvercle (32) dudit récipient collecteur,(14).

11. Appareil pour la préparation d'une boisson chaude selon la revendication 9 ou 10, dans lequel l'élément (70) de ladite paire d'éléments associé à l'obturateur (44) est associé à une partie (66) qui s'étend à l'extérieur d'un corps de valve (42) logeant ledit obturateur (44).

12. Appareil pour la préparation d'une boisson chaude selon l'une des revendications 4 à 11, dans lequel lesdits moyens d'immobilisation comprennent au moins deux paires d'éléments (70, 72) capables d'interagir entre elles au moyen d'un flux magnétique.

13. Appareil pour la préparation d'une boisson chaude selon l'une des revendications 4 12, dans lequel lesdits moyens d'immobilisation comprennent au moins trois paires d'éléments (70, 72) capables d'interagir entre elles au moyen d'un flux magnétique, placées à environ 120° les unes des autres.

14. Appareil pour la préparation d'une boisson chaude selon l'une des revendications 4 à 13, dans lequel lesdits moyens d'immobilisation comprennent au moins une paire d'éléments (70, 72 ; 70, 96) capables d'interagir entre eux au moyen d'un flux magnétique exerçant une force magnétique suivant une direction verticale dans la position dans laquelle l'appareil est utilisé.

15. Appareil (10) pour la préparation d'une boisson chaude selon l'une des revendications 4 à 14, dans lequel lesdits moyens pour l'immobilisation de l'obturateur sont agencés d'une manière telle qu'ils peuvent être activés et désactivés par une force exercée suivant la direction du mouvement de l'obturateur.

16. Appareil pour la préparation d'une boisson chaude selon l'une des revendications 1 à 3, dans lequel lesdits moyens d'immobilisation comprennent des moyens (74, 76) capables de former un raccordement par emboîtement entre ledit obturateur (44) et une partie fixe de l'appareil dans 1a position dans laquelle ledit obturateur (44) est ouvert.

17. Appareil pour la préparation d'une boisson chaude selon la revendication 16, dans lequel lesdits moyens d'immobilisation comprennent des moyens capables de former un raccordement par emboîtement entre ledit obturateur (44) et un corps de valve (42) logeant ledit obturateur (44).

18. Appareil pour la préparation d'une boisson chaude selon la revendication 17, dans lequel lesdits moyens pour la formation d'un raccordement par emboîtement comprennent une première surface inclinée (74) dudit obturateur (44) et une seconde surface inclinée (76) dudit corps de valve (42), ladite première surface inclinée ayant une inclinaison qui est différente de celle de ladite seconde surface inclinée.

19. Appareil pour la préparation d'une boisson chaude selon la revendication 18, dans lequel l'angle d'inclinaison de la première surface inclinée (74) de l'obturateur (44) par rapport à une direction de mouvement de l'obturateur est plus grande que l'angle d'inclinaison de la seconde surface inclinée (76) du corps de valve (42).

20. Appareil pour la préparation d'une boisson chaude selon la revendication 18 ou 19, dans lequel la première surface inclinée (74) et la seconde surface inclinée (76) sont des surfaces tronconiques.

21. Appareil pour la préparation d'une boisson chaude selon l'une des revendications 1 à 3, dans lequel lesdits moyens d'immobilisation comprennent une lame bimétallique (78) interagissant avec ledit obturateur (44) et capable d'adopter au moins deux configurations correspondant aux positions ouverte et fermée de l'obturateur, respectivement.

22. Appareil pour la préparation d'une boisson chaude selon la revendication 21, dans lequel ladite lame bimétallique (78) entoure une partie dudit obturateur (44) autour de la direction du mouvement de l'obturateur.

23. Appareil pour la préparation d'une boisson chaude selon la revendication 21 ou 22, dans lequel ladite lame bimétallique (78) est placée entre l'obturateur (44) et un corps de valve (42) logeant ledit obturateur (44).

24. Appareil pour la préparation d'une boisson chaude selon la revendication 23, dans lequel ladite lame bimétallique (78) est insérée à l'extérieur du corps de valve (42) entre le corps de valve et une partie (66) de l'obturateur (44) qui s'étend à l'extérieur du corps de valve (42).

25. Appareil pour la préparation d'une boisson chaude selon la revendication 24, dans lequel ledit corps de valve (42) comporte une saillie (79) sur laquelle un bord de la lame bimétallique (78) est supporté.

26. Appareil pour la préparation d'une boisson chaude selon la revendication 23, dans lequel la lame bimétallique (78) est insérée dans le corps de valve (42).

27. Appareil pour la préparation d'une boisson chaude selon l'une des revendications précédentes, dans lequel ladite voie de distribution est définie au moins partiellement par un tuyau (28) de distribution qui débouche dans ledit récipient collecteur (14) et dans lequel lesdits moyens à valve (40) sont placés à la sortie dudit tuyau de distribution (28).

28. Appareil pour la préparation d'une boisson chaude selon la revendication 27, dans lequel ledit tuyau de distribution (28) s'étend au moins partiellement à l'intérieur du récipient collecteur (14) suivant un axe (X) et dans lequel lesdits moyens à valve (40) sont placés à la sortie dudit conduit de distribution (28) dans le prolongement dudit axe (X).

29. Appareil pour la préparation d'une boisson chaude selon la revendication 28, dans lequel ledit obturateur (44) peut se déplacer le long dudit axe (X).

30. Appareil pour la préparation d'une boisson chaude selon l'une des revendications 27 à 29, dans lequel lesdits moyens à valve (40) comprennent un corps de valve (42) qui loge l'obturateur (40) pourvu d'une entrée (46) capable d'être placée en communication avec la sortie du tuyau de distribution (28) et d'une sortie (48) pouvant être placée en communication avec ledit récipient collecteur (14).

31. Appareil pour la préparation d'une boisson chaude selon la revendication 30, dans lequel lesdits moyens d'immobilisation sont situés à l'intérieur dudit corps de valve (42).

32. Appareil pour la préparation d'une boisson chaude selon la revendication 31, dans lequel une première partie desdits moyens d'immobilisation est associée audit obturateur (44).

33. Appareil pour la préparation d'une boisson chaude selon la revendication 32, dans lequel une seconde partie desdits moyens d'immobilisation est associée à une partie fixe dudit appareil.

34. Appareil pour la préparation d'une boisson chaude selon la revendication 33, dans lequel une seconde partie desdits moyens d'immobilisation est associée audit corps de valve (42).

35. Appareil pour la préparation d'une boisson chaude selon la revendication 34, dans lequel une seconde partie desdits moyens d'immobilisation est associée à un couvercle (54) dudit corps de valve (42).

36. Appareil pour la préparation d'une boisson chaude selon l'une des revendications 30 à 35, dans lequel ladite entrée (46) du corps de valve (42) est située le long du même axe que ladite voie de distribution (28).

37. Appareil pour la préparation d'une boisson chaude selon la revendication 36, dans lequel ladite sortie (48) du corps de valve (42) est placée latéralement à l'entrée (46) par rapport audit axe (X) de la valve de distribution (28).

38. Appareil pour la préparation d'une boisson chaude selon l'une des revendications 30 à 37, dans lequel ledit conduit (28) de distribution a un prolongement à l'intérieur du récipient collecteur (14) de façon à maintenir l'entrée (46) du corps de valve (42) au-dessus de la surface de la boisson chaude présente dans le récipient collecteur (14).

39. Appareil pour la préparation d'une boisson chaude selon la revendication 38, dans lequel la sortie (48) dudit corps de valve (42) est placée à un niveau plus bas que l'entrée (46) dudit corps de valve (42).

40. Appareil pour la préparation d'une boisson chaude selon la revendication 39, dans lequel ledit corps de valve (42) comporte au moins un conduit (56) ayant une extrémité libre définissant ladite sortie (48) du corps de valve (42).

41. Appareil pour la préparation d'une boisson chaude selon la revendication 40, dans lequel ledit conduit (56) s'étend vers le bas depuis le dessous dudit corps de valve (42).

42. Appareil pour la préparation d'une boisson chaude selon la revendication 41, dans lequel l'étendue entière dudit conduit (56) est placée en dessous de ladite entrée (46) du corps de valve (42).

43. Appareil pour la préparation d'une boisson chaude selon la revendication 40, dans lequel ledit conduit (56) s'étend latéralement par rapport au corps de valve (42).

44. Appareil pour la préparation d'une boisson chaude selon l'une des revendications 40 à 43, dans lequel ledit conduit (56) est monté d'une manière mobile sur le corps de valve (42).

45. Appareil pour la préparation d'une boisson chaude selon l'une des revendications 40 à 43, dans lequel ledit conduit (56) est d'une pièce avec le corps de valve (4z).

46. Appareil pour la préparation d'une boisson chaude selon l'une des revendications 40 à 45, dans lequel ledit conduit (56) est droit.

47. Appareil pour la préparation d'une boisson chaude selon l'une des revendications 40 à 46, dans lequel ledit conduit (56) a une partie terminale (58) qui est inclinée par rapport à une partie de fixation (60) entre ledit conduit (56) et le corps de valve (42).

48. Appareil pour la préparation d'une boisson chaude selon l'une des revendications 40 à 47, dans lequel ledit, au moins un, conduit (56) comporte au moins une partie (58) parallèle audit axe (X) du tuyau de distribution (28).

49. Appareil pour la préparation d'une boisson chaude selon la revendication 48, dans lequel ledit conduit (56) comporte une partie terminale (58) qui est inclinée par rapport la direction dudit axe (X).

50. Appareil pour la préparation d'une boisson chaude selon la revendication 49, dans lequel ladite partie terminale (58) dudit conduit (56) est inclinée dans une direction tangente une circonférence centrée sur ledit axe (X).

51. Appareil pour la préparation d'une boisson chaude selon l'une des revendications 40 à 50, dans lequel ledit conduit comporte une buse (88) placée à la sortie (48) et définissant une section transversale de passage qui est inférieure à la section transversale de passage du conduit (56).

52. Appareil pour la préparation d'une boisson chaude selon l'une des revendications 30 à 51, dans lequel ledit corps de valve (42) comporte des moyens destinés à empêcher la boisson d'être ramenée par aspiration dans le générateur de vapeur.

53. Appareil pour la préparation d'une boisson chaude selon la revendication 52, dans lequel lesdits moyens destinés à empêcher la boisson d'être ramenée par aspiration dans le générateur de vapeur comprennent des moyens d'évent.

54. Appareil pour la préparation d'une boisson chaude selon la revendication 53, dans lequel lesdits moyens d'évent comprennent une ouverture capillaire (62).

55. Appareil pour la préparation d'une boisson chaude selon la revendication 54, lorsqu'elle dépend de l'une des revendications 40 à 51, dans lequel ladite ouverture capillaire (62) est formée dans le même conduit (56) à un niveau tel qu'elle reste au-dessus du niveau de la boisson chaude présente dans le récipient collecteur (14).

56. Appareil pour la préparation d'une boisson chaude selon l'une des revendications 30 à 55, dans lequel ledit corps de valve (42) dans lequel est logé l'obturateur (44) est monté de façon pivotante sur le tuyau de distribution (28) .

57. Appareil pour la préparation d'une boisson chaude selon la revendication 56, dans lequel un siège (50) du corps de valve (42) est monté de façon amovible sur le tuyau de distribution (28) et une coiffe (54) est montée de façon mobile sur ledit siège (50).

58. Appareil pour la préparation d'une boisson chaude selon la revendication 56 ou 57, dans lequel ladite coiffe (54) comporte un raccord à baionnette avec ledit tuyau de distribution.

59. Appareil pour la préparation d'une boisson chaude selon la revendication 58, dans lequel ledit raccord à baïonnette est prévu entre ledit tuyau de distribution (28) et une partie annulaire (84) dudit chapeau (54) qui est conçu pour renfermer extérieurement une partie extrême du tuyau (28) de distribution.

60. Appareil pour la préparation d'une boisson chaude selon la revendication 58 ou 59, dans lequel ledit raccord à baïonnette comporte une gorge (87a) dans ledit chapeau (54) qui peut recevoir une dent (87) via un passage (87b), ladite dent étant d'une pièce avec le tuyau de distribution (28).

61. Appareil pour la préparation d'une boisson chaude selon la revendication 60, dans lequel ledit raccord à baïonnette comporte une bague (86) de guidage et d'immobilisation insérée entre le siège (50) et le tuyau de distribution (28), ladite bague de guidage et d'immobilisation (86) comportant ladite dent (87).

62. Appareil pour la préparation d'une boisson chaude selon l'une des revendications précédentes, dans lequel lesdits moyens pour l'immobilisation de l'obturateur sont agencés d'une manière telle qu'ils peuvent être désactivés en exerçant une force directement sur ledit obturateur afin de le ramener vers la position fermée.

63. Appareil pour la préparation d'une boisson chaude selon l'une des revendications précédentes, dans lequel lesdits moyens valve (40) comprennent un corps de valve (42) dans lequel est logé l'obturateur (44) pourvu d'une entrée (46) pouvant être placé en communication avec la sortie dudit tuyau de distribution, et d'une sortie (48) qui peut être placée en communication avec ledit récipient collecteur (14), et dans lequel ledit obturateur (44) comporte une partie (66) qui s'étend à l'extérieur du corps de valve (42).

64. Appareil pour la préparation d'une boisson chaude selon la revendication 63, dans lequel ladite partie (66) qui s'étend à l'extérieur du corps de valve (42) se présente sous la forme d'un plongeur.

65. Appareil pour la préparation d'une boisson chaude selon la revendication 63 ou 64, dans lequel ladite partie (66) s'étendant à l'extérieur du corps de valve (42) comprend une partie ayant des dimensions plus grandes que la dimension d'une ouverture (68) dudit corps de valve (42) à travers laquelle ledit obturateur (44) s'étend.

66. Appareil pour la préparation d'une boisson chaude selon l'une des revendications 63 à 65, dans lequel ladite partie (66) s'étendant à l'extérieur du corps de valve (42) est montée sur ledit obturateur (44) à travers une ouverture (68) dans ledit corps de valve (42).

67. Appareil pour la préparation d'une boisson chaude selon la revendication 66, dans lequel ladite partie (66) qui s'étend à l'extérieur du corps de valve (42) est vissée sur ledit obturateur (44).

68. Appareil pour la préparation d'une boisson chaude selon l'une des revendications précédentes, comportant un couvercle (32) articulé sur le récipient collecteur (14) et pourvu d'une ouverture (36) pouvant recevoir une partie (66) dudit obturateur (44).

69. Appareil pour la préparation d'une boisson chaude selon la revendication 68 lorsqu'elle dépend de l'une des revendications 63 à 67, dans lequel ladite ouverture (36) peut recevoir une partie (66) dudit obturateur (44) s'étendant à l'extérieur du corps de valve (42).

70. Appareil pour la préparation d'une boisson chaude selon la revendication 68 ou 69, dans lequel ladite ouverture (36) est centrale par rapport au couvercle (32) et coaxiale avec un tuyau (28) de distribution définissant une partie de ladite voie de distribution.

71. Appareil pour la préparation d'une boisson chaude selon l'une des revendications 68 à 70, dans lequel ledit couvercle (32) comporte un élément (38) pouvant être saisi, placé dans une position décentrée sur le couvercle.

72. Appareil pour la préparation d'une boisson chaude selon la revendication 71, dans lequel ledit élément (38) pouvant être saisi est placé entre ladite ouverture (36) et une poignée (34) dudit appareil.

73. Appareil pour la préparation d'une boisson chaude selon la revendication 72, dans lequel ledit élément (38) pouvant être saisi est placé sur une partie en saillie (33) du couvercle (32).

74. Moyens à valve (40) pouvant être utilisés dans un appareil (10) pour la préparation d'une boisson chaude selon l'une des revendications 1 à 73, lesdits moyens à valve comportant un obturateur (44) qui peut se déplacer suivant un axe (X) entre une position dans laquelle la voie de distribution est fermée et une position dans laquelle elle est ouverte, et des moyens destinés à immobiliser l'obturateur dans la position ouverte, dans lesquels lesdits moyens destinés à immobiliser l'obturateur sont agencés d'une manière telle qu'ils peuvent être activés et désactivés par une force exercée suivant la direction du mouvement de l'obturateur.

75. Procédé de préparation d'une boisson chaude comprenant au moins un premier constituant liquide, en utilisant une cafetière (10) comportant un générateur de vapeur (12) et un récipient collecteur (14), ledit procédé comprenant les étapes qui consistent :
à pourvoir la cafetière d'une quantité dudit premier constituant liquide dans le générateur de vapeur (12),
à chauffer le générateur de vapeur (12) jusqu'à une pression excédentaire prédéterminée par rapport à la pression atmosphérique, à laquelle un obturateur (44) placé le long d'une voie de distribution pour le premier constituant liquide depuis le générateur de vapeur vers le récipient collecteur ouvre ladite voie de distribution en se déplaçant suivant un axe (X),
à immobiliser ledit obturateur dans la position dans laquelle la voie de distribution est ouverte jusqu'à ce que la totalité du premier constituant liquide et de la vapeur présents dans le générateur de vapeur ait été distribuée,
dans lequel ledit obturateur (44) est immobilisé dans ladite position dans laquelle la voie de distribution est ouverte ou en est libéré par une force qui est exercée dans la direction du mouvement de l'obturateur.

76. Procédé selon la revendication 75 pour la préparation d'un capuccino en utilisant une cafetière (10) comportant un générateur de vapeur (12), un récipient pour du café moulu (18) et un récipient collecteur (14), ledit procédé comprenant les étapes qui consistent :
à pourvoir la cafetière d'une quantité d'eau dans le générateur de vapeur (12), d'une quantité de café moulu dans le récipient pour café moulu (18) et d'une quantité de lait dans le récipient collecteur (14) de la cafetière,
à chauffer le générateur de vapeur (10) jusqu'à une pression excédentaire prédéterminée par rapport à la pression atmosphérique, à laquelle un obturateur (44) placé le long d'une voie de distribution pour l'infusion de café depuis le générateur de vapeur vers le récipient collecteur (14) ouvre ladite voie de distribution,
à immobiliser ledit obturateur (44) dans la position dans laquelle la voie de distribution (28) est ouverte jusqu'à ce que la totalité de l'infusion de café et de la vapeur présentes dans le générateur de vapeur (10) ait été distribuée,
dans lequel ledit obturateur (44) est immobilisé dans ladite position dans laquelle la voie de distribution est ouverte ou en est libéré par une force exercée dans la direction du mouvement de l'obturateur.

77. Procédé selon la revendication 75 pour faire mousser du lait en utilisant une cafetière (10) comportant un générateur de vapeur (12) et un récipient collecteur (14), ledit procédé comprenant les étapes qui consistent :
à pourvoir la cafetière d'une quantité d'eau dans le générateur de vapeur (12) et d'une quantité de lait dans le récipient collecteur (14) de la cafetière,
à chauffer le générateur de vapeur à une pression excédentaire prédéterminée par rapport à la pression atmosphérique, à laquelle un obturateur (44) placé le long d'une voie de distribution pour l'eau depuis le générateur de vapeur vers le récipient collecteur ouvre ladite voie de distribution,
à immobiliser ledit obturateur (44) dans une position dans laquelle la voie de distribution est ouverte jusqu' à ce que toute l'eau et toute la vapeur présentes dans le générateur de vapeur soient distribuées,
dans lequel ledit obturateur est immobilisé dans ladite position dans laquelle la voie de distribution est ouverte ou en est libéré par une force exercée suivant la direction du mouvement de l'obturateur.

78. Procédé selon la revendication 75, pour obtenir sélectivement une infusion de café avec ou sans mousse en utilisant une cafetière (10) comportant un générateur de vapeur (12), un récipient (18) pour le café en poudre, un récipient collecteur (14) pour l'infusion de café, ledit procédé comprenant les étapes qui consistent :
à pourvoir la cafetière d'une quantité d'eau dans le générateur de vapeur et d'une quantité de café moulu dans le récipient pour le café moulu,
à régler la position d'un obturateur placé le long d'une voie de distribution pour l'eau depuis le générateur de vapeur vers le récipient collecteur entre une position dans laquelle la voie de distribution est fermée et une position dans laquelle elle est ouverte, l'obturateur pouvant être immobilisé dans la position dans laquelle le tuyau de distribution est ouvert par une force exercée dans la direction du mouvement de l'obturateur,
à chauffer le générateur de vapeur à une pression excédentaire par rapport à la pression atmosphérique afin de distribuer une infusion de café avec ou sans mousse suivant la position de réglage de l'obturateur.
